# EUROPEAN PATENT APPLICATION

(11) **EP 4 654 650 A1**
(43) Date of publication of application: **26.11.2025**
(21) Application number: 24756162.4
(22) Date of filing: 06.02.2024
(51) Int. Cl.: H04W 24/02

(54) **QUALITY OF EXPERIENCE MEASUREMENT METHOD, COMMUNICATION APPARATUS, AND COMMUNICATION DEVICE**

(30) Priority: 16.02.2023 CN 202310144919
(71) Applicant: Huawei Technologies Co., Ltd., Shenzhen, Guangdong 518129 (CN)
(72) Inventor: HU, Xingxing, Shenzhen, Guangdong 518129 (CN); CHEN, Jun, Shenzhen, Guangdong 518129 (CN); SUN, Jingcong, Shenzhen, Guangdong 518129 (CN); KOZIOL, Dawid, Shenzhen, Guangdong 518129 (CN)
(74) Representative: Pfenning, Meinig & Partner mbB
(86) International application number: PCT/CN2024/076346
(87) International publication number: WO 2024/169789

(57) **Abstract**

This application discloses a quality of experience measurement method, a communication apparatus, and a communication device. A first radio access network RAN device sends a handover request for a user equipment UE to a second RAN device, where the first RAN device configures a quality of experience QoE measurement task for the UE; the first RAN device receives a handover acknowledgment message from the second RAN device in response to the handover request; and the first RAN device sends an access handover instruction to the UE, where the access handover instruction is used by the UE to determine a target QoE measurement task in the QoE measurement task, and the target QoE measurement task is a QoE measurement task that the UE keeps executing after accessing the second RAN device. In this application, the UE may select, from the QoE measurement task configured by the first RAN device for the UE, the target QoE measurement task that keeps being executed. Because the target QoE measurement task can meet a protocol standard in which the second RAN device works, the protocol standard in which the second RAN device works does not need to be modified, thereby improving efficiency of the QoE measurement task.

## Description

This application claims priority to Chinese Patent Application No. 202310144919.7, filed with the China National Intellectual Property Administration on February 16, 2023 and entitled "QUALITY OF EXPERIENCE MEASUREMENT METHOD, COMMUNICATION APPARATUS, AND COMMUNICATION DEVICE", which is incorporated herein by reference in its entirety.

### TECHNICAL FIELD

This application relates to the field of communication technologies, and in particular, to a quality of experience measurement method, a communication apparatus, and a communication device, to improve efficiency of QoE measurement.

### BACKGROUND

For some streaming-type services or voice services, for example, a streaming service (streaming service) and a multimedia telephony service for internet protocol multimedia subsystem (multimedia telephony service for IP multimedia subsystem, MTSI service), only signal quality cannot reflect user experience when a user uses these services. As a result, if an operator wants to know how user experience is, a base station may initiate a quality of experience (quality of experience, QoE) measurement (also referred to as application layer measurement) procedure for a user equipment (user equipment, UE), to better understand user experience when the user uses these services, so that a network is optimized to improve user experience.

In a process in which the UE executes a QoE measurement task configured by an NR base station, when a radio access network (radio access network, RAN) device accessed by the UE is handed over from the new radio (new radio, NR) base station to a long term evolution (long term evolution, LTE) base station, a measurement result subsequently reported by the UE is not reported to the NR base station, but is reported to the LTE base station.

Currently, all features of the QoE measurement task in the NR base station may be introduced to the LTE base station by modifying a protocol standard in which the LTE base station works, to implement continuity of the QoE measurement task in a process in which the UE is handed over from the NR base station to the LTE base station. For example, the NR base station supports simultaneous execution of a plurality of QoE measurement tasks for the UE, and the LTE base station supports execution of only one QoE measurement task for the UE at the same time. Therefore, when the RAN device accessed by the UE is handed over from the NR base station to the LTE base station, to enable the LTE base station to simultaneously execute the plurality of QoE measurement tasks for the UE and implement continuation of the QoE measurement tasks, the protocol standard in which the LTE base station works needs to be modified, increasing implementation difficulty and complexity.

### SUMMARY

This application provides a quality of experience measurement method, a communication apparatus, and a communication device, to improve efficiency of QoE measurement.

According to a first aspect, this application provides a quality of experience measurement method. A first RAN device and a second RAN device are RAN devices in different networks. The first RAN device is compatible with a QoE measurement task configured by the second RAN device, that is, the QoE measurement task configured by the second RAN device for a UE can continue to be carried on the first RAN device; and the second RAN device cannot be fully and completely compatible with a QoE measurement task configured by the first RAN device, that is, the QoE measurement task configured by the first RAN device for the UE cannot continue to be fully and completely carried on the second RAN device.

The UE accesses the first RAN device, and the first RAN device configures the QoE measurement task for the UE. There may be one or more QoE measurement tasks configured by the first RAN device for the UE. This is not limited in this application. The first RAN device sends a handover request for the UE to the second RAN device, to notify that the UE needs to access the second RAN device. After receiving the handover request, the second RAN device is allowed to provide an access handover service for the UE, and sends, to the first RAN device, a handover acknowledgment message in response to the handover request.

The first RAN device sends an access handover instruction to the UE, to indicate the UE to access the second RAN device. The UE may determine, based on an indication of the access handover instruction, a target QoE measurement task in the QoE measurement task configured by the first RAN device for the UE, and the target QoE measurement task is a QoE measurement task that the UE keeps executing after accessing the second RAN device.

In this application, after the UE is handed over from the first RAN device to the second RAN device, the UE may select, from the QoE measurement task configured by the first RAN device for the UE, the target QoE measurement task that keeps being executed. Because the target QoE measurement task is a QoE measurement task that meets a protocol standard in which the second RAN device works, the protocol standard in which the second RAN device works does not need to be modified, thereby implementing continuity of QoE measurement, and also improving efficiency of the QoE measurement task.

According to the first aspect, in an optional implementation, the first RAN device and the second RAN device may determine, in QoE measurement tasks configured by the first RAN device for the UE, specific QoE measurement tasks that belong to the target QoE measurement task, namely, specific QoE measurement tasks that may keep being executed after the UE accesses the second RAN device. Therefore, after determining and selecting the target QoE measurement task, the first RAN device or the second RAN device indicates the target QoE measurement task by using the access handover instruction. Specifically, the access handover instruction includes first indication information, the first indication information indicates at least one of a first QoE measurement task, a second QoE measurement task, or a third QoE measurement task, the first QoE measurement task is a QoE measurement task that the UE keeps executing and keeps reporting a measurement result for (namely, a target QoE measurement task for which the UE keeps reporting a measurement result) after accessing the second RAN device, the second QoE measurement task is a QoE measurement task that the UE keeps executing and suspends reporting a measurement result for (namely, a target QoE measurement task for which the UE suspends reporting a measurement result) after accessing the second RAN device, and the third QoE measurement task is a QoE measurement task whose execution is canceled by the UE after the UE accesses the second RAN device. The UE only needs to determine the target QoE measurement task based on the indication of the access handover instruction, thereby improving efficiency of performing QoE measurement by the UE, and reducing computing load of the UE.

According to the first aspect, in an optional implementation, the handover acknowledgment message sent by the second RAN device to the first RAN device may indicate at least one of the first QoE measurement task, the second QoE measurement task, or the third QoE measurement task, the first QoE measurement task is the QoE measurement task that the UE keeps executing and keeps reporting the measurement result for (namely, the target QoE measurement task for which the UE keeps reporting the measurement result) after accessing the second RAN device, the second QoE measurement task is the QoE measurement task that the UE keeps executing and suspends reporting the measurement result for (namely, the target QoE measurement task for which the UE suspends reporting the measurement result) after accessing the second RAN device, and the third QoE measurement task is the QoE measurement task whose execution is canceled by the UE after the UE accesses the second RAN device.

According to the first aspect, in an optional implementation, the handover request sent by the first RAN device to the second RAN device may indicate at least one of the first QoE measurement task, the second QoE measurement task, or the third QoE measurement task, the first QoE measurement task is the QoE measurement task that the UE keeps executing and keeps reporting the measurement result for (namely, the target QoE measurement task for which the UE keeps reporting the measurement result) after accessing the second RAN device, the second QoE measurement task is the QoE measurement task that the UE keeps executing and suspends reporting the measurement result for (namely, the target QoE measurement task for which the UE suspends reporting the measurement result) after accessing the second RAN device, and the third QoE measurement task is the QoE measurement task whose execution is canceled by the UE after the UE accesses the second RAN device.

According to the first aspect, in an optional implementation, the first RAN device may include second indication information in the access handover instruction, the second indication information indicates a third QoE measurement task, and the third QoE measurement task is a QoE measurement task whose execution is canceled by the UE after the UE accesses the second RAN device. Therefore, the UE knows the QoE measurement task (namely, the third QoE measurement task) whose execution that needs to be canceled in the QoE measurement task configured by the first RAN device for the UE. Specifically, after the UE accesses the second RAN device, the UE may sense, by using a communication protocol between the UE and the second RAN device, a QoE measurement task that is not supported by the second RAN device. Therefore, the UE may determine, as the target QoE measurement task, a QoE measurement task that is other than the third QoE measurement task in the QoE measurement task configured by the first RAN device for the UE and that is capable of being supported by the second RAN device. The UE autonomously determines the target QoE measurement task, so that an amount of information exchange between the first RAN device and the second RAN device is reduced, and handover efficiency of the UE to the RAN device is improved.

According to the first aspect, in an optional implementation, when there is one target QoE measurement task determined by the UE, and the target QoE measurement task is capable of being exactly supported by the second RAN device, the UE may keep reporting a measurement result of the target QoE measurement task, that is, the target QoE measurement task is a first QoE measurement task in this application.

According to the first aspect, in an optional implementation, when there are a plurality of target QoE measurement tasks determined by the UE, and these target QoE measurement tasks are incapable of being simultaneously supported by the second RAN device, the UE may suspend reporting measurement results of all the target QoE measurement tasks, that is, these target QoE measurement tasks are second QoE measurement tasks in this application.

According to the first aspect, in an optional implementation, the access handover instruction includes third indication information, and the third indication information indicates the UE to cancel reporting a RAN device visible measurement result. In a scenario in which the first RAN device is an NR base station and the second RAN device is an LTE base station, the LTE base station cannot sense a RAN device visible measurement result. As a result, it is meaningless to report the RAN device visible measurement result to the second RAN device, and the third indication information may indicate the UE to cancel reporting the RAN device visible measurement result, so that workload of the UE is reduced, and efficiency of performing QoE measurement by the UE is improved.

According to the first aspect, in an optional implementation, the handover request includes fourth indication information, the fourth indication information indicates a first MDT task and a second MDT task that are associated with a same QoE measurement task, the first MDT task is an MDT task associated with the QoE measurement task when the UE accesses the first RAN device, and the second MDT task is an MDT task associated with the QoE measurement task when the UE accesses the second RAN device. After the UE reports the measurement result of the target QoE measurement task to the second RAN device, the second RAN device may determine, based on the fourth indication information, the second MDT task corresponding to the target QoE measurement task. In this way, even after the UE is handed over from the first RAN device to the second RAN device, the QoE measurement task is still associated with the MDT task. This facilitates a problem of continuing to locate a service.

According to the first aspect, in an optional implementation, QoE measurement collection devices corresponding to the first RAN device and the second RAN device may be the same, or may be different. When the first RAN device sends the handover request to the second RAN device, the handover request includes an address of a first QoE measurement collection device and an address of a second QoE measurement collection device. For the address of the first QoE measurement collection device and the address of the second QoE measurement collection device in the first RAN device, a CN, an OAM entity, or an EM entity includes the address of the first QoE measurement collection device and the address of the second QoE measurement collection device in QoE measurement collection configuration information when initiating QoE measurement, and sends the configuration information to the first RAN device. The first QoE measurement collection device is configured to collect a measurement result of a QoE measurement task from the first RAN device, and the second QoE measurement collection device is configured to collect a measurement result of a QoE measurement task from the second RAN device. Therefore, after the UE is handed over to the second RAN device, the second RAN device receives the measurement result, of the target QoE measurement task, reported by the UE, and the second RAN device sends the measurement result of the target QoE measurement task to the second QoE measurement collection device based on the address of the second QoE measurement collection device. The QoE measurement collection device corresponding to the first RAN device and the QoE measurement collection device corresponding to the second RAN device are distinguished, thereby improving management efficiency of the measurement result of the QoE measurement task.

According to a second aspect, this application provides a quality of experience measurement method. The method includes:

A user equipment UE receives a handover instruction from a first radio access network RAN device, where the first RAN device has configured a quality of experience QoE measurement task for the UE;
the UE determines a target QoE measurement task in the QoE measurement task based on the handover instruction;
the UE accesses a second RAN device based on the handover instruction; and
the UE keeps executing the target QoE measurement task.

According to the second aspect, in an optional implementation, the handover instruction includes first indication information, the first indication information indicates at least one of a first QoE measurement task, a second QoE measurement task, or a third QoE measurement task, the first QoE measurement task is a target QoE measurement task for which the UE keeps reporting a measurement result after accessing the second RAN device, the second QoE measurement task is a target QoE measurement task for which the UE suspends reporting a measurement result after accessing the second RAN device, and the third QoE measurement task is a QoE measurement task whose execution is canceled by the UE after the UE accesses the second RAN device.

According to the second aspect, in an optional implementation, the handover instruction includes second indication information, the second indication information indicates a third QoE measurement task, and the third QoE measurement task is a QoE measurement task whose execution is canceled by the UE after the UE accesses the second RAN device.

According to the second aspect, in an optional implementation, that the UE determines the target QoE measurement task in the QoE measurement task based on the handover instruction includes:

The UE determines a target QoE measurement task in a plurality of QoE measurement tasks based on the third QoE measurement task indicated by the second indication information, where the target QoE measurement task is a QoE measurement task that is other than the third QoE measurement task in the QoE measurement task and that is capable of being supported by the second RAN device.

According to the second aspect, in an optional implementation, that the UE determines the target QoE measurement task in the QoE measurement task based on the handover instruction includes:

In response to receiving the handover instruction, the UE determines that a QoE measurement task that is capable of being supported by the second RAN device in the QoE measurement task is the target QoE measurement task.

According to the second aspect, in an optional implementation, if there is one target QoE measurement task, the target QoE measurement task is a first QoE measurement task, and the first QoE measurement task is a target QoE measurement task for which the UE keeps reporting a measurement result after accessing the second RAN device.

According to the second aspect, in an optional implementation, if there are a plurality of target QoE measurement tasks, the target QoE measurement task is a second QoE measurement task, and the second QoE measurement task is a target QoE measurement task for which the UE suspends reporting a measurement result after accessing the second RAN device.

According to the second aspect, in an optional implementation, after the UE accesses the second RAN device based on the handover instruction, the method further includes:

The UE accesses a third RAN device from the second RAN device; and
the UE sends a QoE measurement record to the third device, where the QoE measurement record indicates at least one of the first QoE measurement task, the second QoE measurement task, or the third QoE measurement task, the first QoE measurement task is the target QoE measurement task for which the UE keeps reporting the measurement result after accessing the second RAN device, the second QoE measurement task is the target QoE measurement task for which the UE suspends reporting the measurement result after accessing the second RAN device, and the third QoE measurement task is the QoE measurement task whose execution is canceled by the UE after the UE accesses the second RAN device.

Content such as information exchange and an execution process of the embodiment shown in this aspect is based on a same concept as the embodiment shown in the first aspect. Therefore, for descriptions of beneficial effect shown in this aspect, refer to the first aspect. Details are not described herein again.

According to a third aspect, this application provides a quality of experience measurement method. The method includes:

A second radio access network RAN device receives a handover request for a user equipment UE from a first RAN device, where the first RAN device configures a quality of experience QoE measurement task for the UE; and
the second RAN device sends a handover acknowledgment message for the handover request to the first RAN device, where the handover acknowledgment message indicates a target QoE measurement task, and the target QoE measurement task is a QoE measurement task that the UE keeps executing after accessing the second RAN device.

According to the third aspect, in an optional implementation, the handover acknowledgment message further indicates a third QoE measurement task, and the third QoE measurement task is a QoE measurement task whose execution is canceled by the UE after the UE accesses the second RAN device.

According to the third aspect, in an optional implementation, the target QoE measurement task includes a first QoE measurement task and a second QoE measurement task, the first QoE measurement task is a target QoE measurement task for which the UE keeps reporting a measurement result after accessing the second RAN device, and the second QoE measurement task is a target QoE measurement task for which the UE suspends reporting a measurement result after accessing the second RAN device.

According to the third aspect, in an optional implementation, the handover request includes fourth indication information, the fourth indication information indicates a first minimization of drive tests MDT task and a second MDT task that are associated with a same QoE measurement task, the first MDT task is an MDT task associated with the QoE measurement task when the UE accesses the first RAN device, and the second MDT task is an MDT task associated with the QoE measurement task when the UE accesses the second RAN device.

According to the third aspect, in an optional implementation, the method further includes:

The second RAN device receives a measurement result of the target QoE measurement task from the UE; and
the second RAN device determines, based on third indication information and the measurement result of the target QoE measurement task, the second MDT task corresponding to the target QoE measurement task.

According to the third aspect, in an optional implementation, the method further includes:

The second RAN device obtains fifth indication information, where the fifth indication information indicates a second MDT task associated with the target QoE measurement task;
the second RAN device receives a measurement result of the target QoE measurement task from the UE; and
the second RAN device determines, based on the fifth indication information and the measurement result of the target QoE measurement task, the second MDT task corresponding to the target QoE measurement task.

Content such as information exchange and an execution process of the embodiment shown in this aspect is based on a same concept as the embodiment shown in the first aspect. Therefore, for descriptions of beneficial effect shown in this aspect, refer to the first aspect. Details are not described herein again.

According to a fourth aspect, this application provides a communication apparatus. The communication apparatus includes:
a sending unit, configured to send a handover request for a user equipment UE to a second RAN device, where a first RAN device configures a quality of experience QoE measurement task for the UE; and
a receiving unit, configured to receive a handover acknowledgment message from the second RAN device in response to the handover request, where
the sending unit is further configured to send an access handover instruction to the UE, where the access handover instruction is used by the UE to determine a target QoE measurement task in the QoE measurement task, and the target QoE measurement task is a QoE measurement task that the UE keeps executing after accessing the second RAN device.

According to the fourth aspect, in an optional implementation, the access handover instruction includes first indication information, the first indication information indicates at least one of a first QoE measurement task, a second QoE measurement task, or a third QoE measurement task, the first QoE measurement task is a target QoE measurement task for which the UE keeps reporting a measurement result after accessing the second RAN device, the second QoE measurement task is a target QoE measurement task for which the UE suspends reporting a measurement result after accessing the second RAN device, and the third QoE measurement task is a QoE measurement task whose execution is canceled by the UE after the UE accesses the second RAN device.

According to the fourth aspect, in an optional implementation, the handover acknowledgment message indicates at least one of the first QoE measurement task, the second QoE measurement task, or the third QoE measurement task.

According to the fourth aspect, in an optional implementation, the handover request indicates at least one of the first QoE measurement task, the second QoE measurement task, or the third QoE measurement task.

According to the fourth aspect, in an optional implementation, the access handover instruction includes second indication information, the second indication information indicates a third QoE measurement task, the third QoE measurement task is a QoE measurement task whose execution is canceled by the UE after the UE accesses the second RAN device, the second indication information is used by the UE to determine the target QoE measurement task based on the third QoE measurement task, and the target QoE measurement task is a QoE measurement task that is other than the third QoE measurement task in the QoE tasks and that is capable of being supported by the second RAN device.

According to the fourth aspect, in an optional implementation, if there is one target QoE measurement task, the target QoE measurement task is a first QoE measurement task, and the first QoE measurement task is a target QoE measurement task for which the UE keeps reporting a measurement result after accessing the second RAN device.

According to the fourth aspect, in an optional implementation, if there are a plurality of target QoE measurement tasks, the target QoE measurement task is a second QoE measurement task, and the second QoE measurement task is a target QoE measurement task for which the UE suspends reporting a measurement result after accessing the second RAN device.

According to the fourth aspect, in an optional implementation, the access handover instruction includes third indication information, and the third indication information indicates the UE to cancel reporting a RAN device visible measurement result.

According to the fourth aspect, in an optional implementation, the handover request includes fourth indication information, the fourth indication information indicates a first minimization of drive tests MDT task and a second MDT task that are associated with each QoE measurement task, the first MDT task is an MDT task associated with the QoE measurement task when the UE accesses the first RAN device, and the second MDT task is an MDT task associated with the QoE measurement task when the UE accesses the second RAN device.

According to the fourth aspect, in an optional implementation, the handover request includes an address of a first QoE measurement collection device and an address of a second QoE measurement collection device, the first QoE measurement collection device is configured to collect a measurement result of a QoE measurement task from the first RAN device, and the second QoE measurement collection device is configured to collect a measurement result of a QoE measurement task from the second RAN device.

Content such as information exchange and an execution process of the embodiment shown in this aspect is based on a same concept as the embodiment shown in the first aspect. Therefore, for descriptions of beneficial effect shown in this aspect, refer to the first aspect. Details are not described herein again.

According to a fifth aspect, this application provides a communication apparatus. The communication apparatus includes:
a transceiver unit, configured to receive a handover instruction from a first radio access network RAN device, where the first RAN device has configured a quality of experience QoE measurement task for a UE; and
a processing unit, configured to determine a target QoE measurement task in the QoE measurement task based on the handover instruction, where
the processing unit is further configured to access a second RAN device based on the handover instruction; and
the processing unit is further configured to keep executing the target QoE measurement task.

According to the fifth aspect, in an optional implementation, the handover instruction includes first indication information, the first indication information indicates at least one of a first QoE measurement task, a second QoE measurement task, or a third QoE measurement task, the first QoE measurement task is a target QoE measurement task for which the UE keeps reporting a measurement result after accessing the second RAN device, the second QoE measurement task is a target QoE measurement task for which the UE suspends reporting a measurement result after accessing the second RAN device, and the third QoE measurement task is a QoE measurement task whose execution is canceled by the UE after the UE accesses the second RAN device.

According to the fifth aspect, in an optional implementation, the handover instruction includes second indication information, the second indication information indicates a third QoE measurement task, and the third QoE measurement task is a QoE measurement task whose execution is canceled by the UE after the UE accesses the second RAN device.

According to the fifth aspect, in an optional implementation, the processing unit is specifically configured to:
determine a target QoE measurement task in a plurality of QoE measurement tasks based on the third QoE measurement task indicated by the second indication information, where the target QoE measurement task is a QoE measurement task that is other than the third QoE measurement task in the QoE measurement task and that is capable of being supported by the second RAN device.

According to the fifth aspect, in an optional implementation, the processing unit is specifically configured to:
in response to receiving the handover instruction, determine, by the UE, that a QoE measurement task that is capable of being supported by the second RAN device in the QoE measurement task is the target QoE measurement task.

According to the fifth aspect, in an optional implementation, if there is one target QoE measurement task, the target QoE measurement task is a first QoE measurement task, and the first QoE measurement task is a target QoE measurement task for which the UE keeps reporting a measurement result after accessing the second RAN device.

According to the fifth aspect, in an optional implementation, if there are a plurality of target QoE measurement tasks, the target QoE measurement task is a second QoE measurement task, and the second QoE measurement task is a target QoE measurement task for which the UE suspends reporting a measurement result after accessing the second RAN device.

According to the fifth aspect, in an optional implementation, the processing unit is further configured to:
access a third RAN device; and
send a QoE measurement record to the third device, where the QoE measurement record indicates at least one of the first QoE measurement task, the second QoE measurement task, or the third QoE measurement task, the first QoE measurement task is the target QoE measurement task for which the UE keeps reporting the measurement result after accessing the second RAN device, the second QoE measurement task is the target QoE measurement task for which the UE suspends reporting the measurement result after accessing the second RAN device, and the third QoE measurement task is the QoE measurement task whose execution is canceled by the UE after the UE accesses the second RAN device.

Content such as information exchange and an execution process of the embodiment shown in this aspect is based on a same concept as the embodiment shown in the first aspect. Therefore, for descriptions of beneficial effect shown in this aspect, refer to the first aspect. Details are not described herein again.

According to a sixth aspect, this application provides a communication apparatus. The communication apparatus includes:
a transceiver unit, configured to receive a handover request for a user equipment UE from a first RAN device, where the first RAN device configures a quality of experience QoE measurement task for the UE; and
a transceiver unit, configured to send a handover acknowledgment message for the handover request to the first RAN device, where the handover acknowledgment message indicates a target QoE measurement task, and the target QoE measurement task is a QoE measurement task that the UE keeps executing after accessing the second RAN device.

According to the sixth aspect, in an optional implementation, the handover acknowledgment message further indicates a third QoE measurement task, and the third QoE measurement task is a QoE measurement task whose execution is canceled by the UE after the UE accesses the second RAN device.

According to the sixth aspect, in an optional implementation, the target QoE measurement task includes a first QoE measurement task and a second QoE measurement task, the first QoE measurement task is a target QoE measurement task for which the UE keeps reporting a measurement result after accessing the second RAN device, and the second QoE measurement task is a target QoE measurement task for which the UE suspends reporting a measurement result after accessing the second RAN device.

According to the sixth aspect, in an optional implementation, the handover request includes fourth indication information, the fourth indication information indicates a first minimization of drive tests MDT task and a second MDT task that are associated with each QoE measurement task, the first MDT task is an MDT task associated with the QoE measurement task when the UE accesses the first RAN device, and the second MDT task is an MDT task associated with the QoE measurement task when the UE accesses the second RAN device.

According to the sixth aspect, in an optional implementation, the communication apparatus further includes a processing unit, where
the transceiver unit is further configured to receive a measurement result of the target QoE measurement task from the UE; and
the processing unit is configured to determine, based on third indication information and the measurement result of the target QoE measurement task, the second MDT task corresponding to the target QoE measurement task.

According to the sixth aspect, in an optional implementation,
the transceiver unit is further configured to obtain fifth indication information, where the fifth indication information indicates a second MDT task associated with the target QoE measurement task;
the transceiver unit is further configured to receive a measurement result of the target QoE measurement task from the UE; and
the processing unit is further configured to determine, based on the fifth indication information and the measurement result of the target QoE measurement task, the second MDT task corresponding to the target QoE measurement task.

Content such as information exchange and an execution process of the embodiment shown in this aspect is based on a same concept as the embodiment shown in the first aspect. Therefore, for descriptions of beneficial effect shown in this aspect, refer to the first aspect. Details are not described herein again.

According to a seventh aspect, this application provides a communication device. The communication device includes a processor and an interface circuit. The interface circuit is configured to receive a signal from another communication apparatus and transmit the signal to the processor, or send a signal from the processor to another communication apparatus. The processor is configured to implement the method according to any one of the first aspect or the possible implementations of the first aspect through a logical circuit or by executing code instructions.

According to an eighth aspect, this application provides a communication device. The communication device includes a processor and an interface circuit. The interface circuit is configured to receive a signal from another communication apparatus and transmit the signal to the processor, or send a signal from the processor to another communication apparatus. The processor is configured to implement the method according to any one of the second aspect or the possible implementations of the second aspect through a logical circuit or by executing code instructions.

According to a ninth aspect, this application provides a communication device. The communication device includes a processor and an interface circuit. The interface circuit is configured to receive a signal from another communication apparatus and transmit the signal to the processor, or send a signal from the processor to another communication apparatus. The processor is configured to implement the method according to any one of the third aspect or the possible implementations of the third aspect through a logical circuit or by executing code instructions.

According to a tenth aspect, an embodiment of this application provides a computer-readable storage medium. The computer-readable storage medium stores instructions. When the instructions are executed, a computer is enabled to perform the method according to any one of the first aspect or the possible implementations of the first aspect.

According to an eleventh aspect, an embodiment of this application provides a computer-readable storage medium. The computer-readable storage medium stores instructions. When the instructions are executed, a computer is enabled to perform the method according to any one of the second aspect or the possible implementations of the second aspect.

According to a twelfth aspect, an embodiment of this application provides a computer-readable storage medium. The computer-readable storage medium stores instructions. When the instructions are executed, a computer is enabled to perform the method according to any one of the third aspect or the possible implementations of the third aspect.

According to a thirteenth aspect, an embodiment of this application provides a communication system. The communication system includes the communication apparatus according to the fourth aspect, the communication apparatus according to the fifth aspect, and the communication apparatus according to the sixth aspect.

### BRIEF DESCRIPTION OF DRAWINGS

FIG. 1 is a diagram of a possible and non-limiting system architecture in a QoE measurement scenario;
FIG. 2 is a schematic flowchart of conventional QoE measurement;
FIG. 3 is a schematic flowchart of a quality of experience measurement method according to this application;
FIG. 4 is another schematic flowchart of a quality of experience measurement method according to this application;
FIG. 5 is another schematic flowchart of a quality of experience measurement method according to this application;
FIG. 6 is another schematic flowchart of a quality of experience measurement method according to this application;
FIG. 7 is a diagram of a structure of a communication apparatus according to an embodiment of this application;
FIG. 8 is a diagram of another structure of a communication apparatus according to an embodiment of this application;
FIG. 9 is a diagram of another structure of a communication apparatus according to an embodiment of this application; and
FIG. 10 is a diagram of a structure of a communication device 1000 according to this application.

### DESCRIPTION OF EMBODIMENTS

Embodiments of this application provide a quality of experience measurement method, a communication apparatus, and a communication device, to improve efficiency of QoE measurement.

The following describes embodiments of this application with reference to the accompanying drawings in embodiments of this application. Terms used in embodiments of this application are merely used to explain specific embodiments of this application, but are not intended to limit this application. A person of ordinary skill in the art may know that, with development of technologies and emergence of a new scenario, the technical solutions provided in embodiments of this application are also applicable to a similar technical problem.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances, so that embodiments of this application described herein can be implemented in an order other than the order illustrated or described herein. In addition, the terms "include", "have", and variants thereof are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

The following explains and describes some nouns or terms used in this application, and the nouns or terms are also used as a part of the present invention.

With network construction and development, an operation mode of an operator gradually changes from a single voice service to a multi-service mode in which a plurality of services are parallel.

For some streaming-type services or voice services, for example, a streaming service (streaming service) and a multimedia telephony service for internet protocol multimedia subsystem (multimedia telephony service for IP multimedia subsystem, MTSI service), only signal quality cannot reflect user experience when a user uses these services. As a result, if an operator wants to know how user experience is, a base station may initiate a quality of experience (quality of experience, QoE) measurement (also referred to as application layer measurement) procedure for a user equipment (user equipment, UE), to better understand user experience when the user uses these services, so that a network is optimized to improve user experience. In the QoE measurement procedure, configuration information of a QoE measurement task may be sent by a core network (core network, CN) or an operation, administration, and maintenance (operation, administration, and maintenance, OAM) entity to the base station, and the base station then sends the configuration information to the UE. The UE executes the QoE measurement task based on the configuration information, to obtain a measurement result of the QoE measurement task, and sends the measurement result to the base station. The base station finally reports the measurement result to a QoE measurement collection entity, and the QoE measurement collection entity analyzes and evaluates the measurement result, to understand user experience.

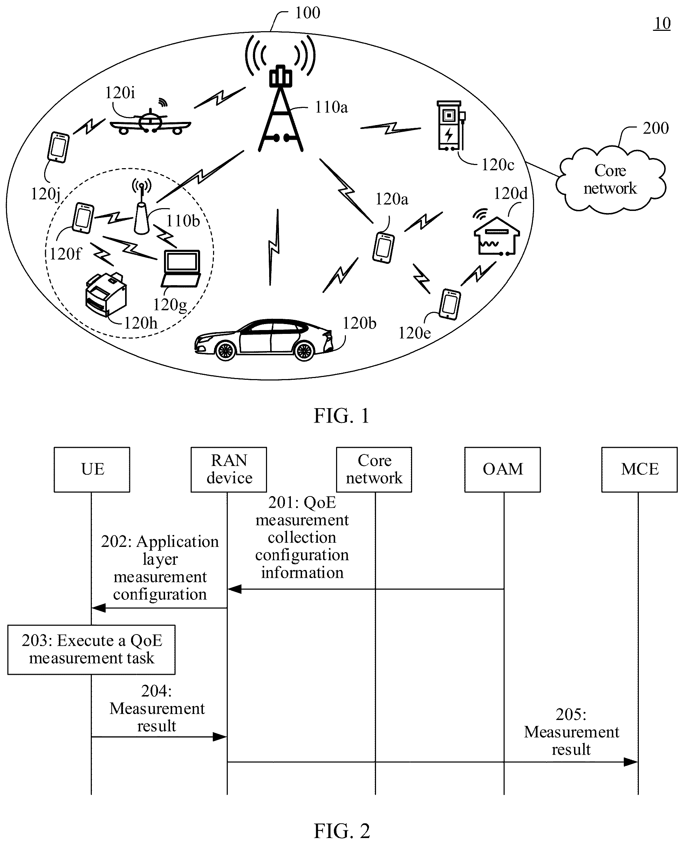

For ease of understanding, a possible and non-limiting system architecture in a QoE measurement scenario is first described. FIG. 1 is a diagram of a possible and non-limiting system architecture in a QoE measurement scenario. As shown in FIG. 1, a communication system 10 includes a radio access network (radio access network, RAN) 100 and a core network (core network, CN) 200. The RAN 100 includes at least one RAN device (for example, 110a and 110b in FIG. 1, which are collectively referred to as 110) and at least one UE (for example, 120a to 120j in FIG. 1, which are collectively referred to as 120). The RAN 100 may further include another RAN device, for example, a wireless relay device and/or a wireless backhaul device (not shown in FIG. 1). The UE 120 is connected to the RAN device 110 in a wireless manner. The RAN device 110 is connected to the core network 200 in a wireless or wired manner. A core network device in the core network 200 and the RAN device 110 in the RAN 100 may be different physical devices, or may be a same physical device that integrates a logical function of the core network and a logical function of the radio access network.

The core network device is a device in the core network (core network, CN) that provides service support for the UE. Currently, some examples of the core network device are as follows: an access and mobility management function (access and mobility management function, AMF) entity, a session management function (session management function, SMF) entity, and a user plane function (user plane function, UPF) entity, which are not enumerated herein. The AMF entity may be responsible for access management and mobility management of a terminal. The SMF entity may be responsible for session management, for example, user session establishment. The UPF entity may be a functional entity on a user plane, and is mainly responsible for a connection to an external network. It should be noted that the entity in this application may also be referred to as a network element or a functional entity. For example, the AMF entity may also be referred to as an AMF network element or an AMF functional entity. For another example, the SMF entity may also be referred to as an SMF network element, an SMF functional entity, or the like.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). Alternatively, the RAN 100 may be an open radio access network (open RAN, O-RAN or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

Alternatively, the RAN node 110 may be sometimes referred to as an access network device, a RAN entity, an access node, or the like, and forms a part of a communication system, to help the UE implement radio access. A plurality of RAN devices 110 in the communication system 10 may be nodes of a same type, or may be nodes of different types. In some scenarios, roles of the RAN device 110 and the UE 120 are relative. For example, a network element 120i in FIG. 1 may be a helicopter or an uncrewed aerial vehicle, and may be configured as a mobile base station. For the UE 120j that accesses the RAN 100 through the network element 120i, the network element 120i is a base station. However, for the base station 110a, the network element 120i is a UE. The RAN device 110 and the UE 120 are sometimes referred to as communication apparatuses. For example, the network elements 110a and 110b in FIG. 1 may be understood as communication apparatuses having a base station function, and the network elements 120a to 120j may be understood as communication apparatuses having a UE function.

In a possible scenario, the RAN device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN device may be a macro base station (for example, 110a in FIG. 1), a micro base station or an indoor station (for example, 110b in FIG. 1), a relay node or a donor node, or a radio controller in a CRAN scenario. Optionally, the RAN device may alternatively be a server, a wearable device, a vehicle, a vehicle-mounted device, or the like. For example, the access network device in a vehicle to everything (vehicle to everything, V2X) technology may be a road side unit (road side unit, RSU). All or some functions of the RAN device in this application may alternatively be implemented by using a software function running on hardware, or may be implemented by using a virtualization function instantiated on a platform (for example, a cloud platform). The RAN device in this application may alternatively be a logical node, a logical module, or software that can implement all or some functions of the RAN device.

In another possible scenario, a plurality of RAN devices coordinate to assist the UE in implementing radio access, and different RAN devices separately implement some functions of the base station. For example, the RAN device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented through a software module, a hardware module, or a combination of the software module and the hardware module.

The UE may also be referred to as a terminal, a terminal device, a mobile station, a mobile terminal, or the like. The UE may be widely used in various scenarios, for example, device-to-device (device-to-device, D2D) communication, vehicle to everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wear, smart transportation, and a smart city. The UE may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the UE is not limited in embodiments of this application.

In the communication system 10, the RAN device 110 and the UE 120 may communicate with each other through a wireless network, a wired network, or a removable storage medium. A standard communication technology and/or protocol is used for the wireless network. The wireless network is usually the internet (Internet), but can also be any network, including but not limited to, Bluetooth, a local area network (Local Area Network, LAN), a metropolitan area network (Metropolitan Area Network, MAN), a wide area network (Wide Area Network, WAN), or any combination of a mobile network, a private network, or a virtual private network. In some application scenarios, a customized or dedicated data communication technology may also be used to replace or supplement the foregoing data communication technology. The removable storage medium may be a universal serial bus (Universal Serial Bus, USB) flash drive, a removable hard disk, another removable storage medium, or the like. This is not limited in this application.

The following describes a QoE measurement scenario through interaction between the RAN device 110 and the UE 120. It should be understood that during actual application, the technical solutions provided in this application are also applicable to other "RAN devices" and "UEs" that are described differently or of different types.

QoE measurement can be divided into signaling-based QoE measurement and management-based QoE measurement. The signaling-based QoE measurement means that a QoE measurement task is for a specific UE. For example, the core network sends configuration information of the signaling-based QoE measurement task to the base station by using UE-level signaling. The management-based QoE measurement means that a QoE measurement task is not for a specific UE. For example, an element management (element management, EM) entity or an operation, administration, and maintenance (Operation, administration, and maintenance, OAM) entity sends configuration information of the management-based QoE measurement to the base station, and the base station selects, based on a capability of the UE currently accessing the base station and other information, a part of UEs to perform QoE measurement.

FIG. 2 is a schematic flowchart of conventional QoE measurement. As shown in FIG. 2, a procedure of the conventional QoE measurement includes the following steps.

201: A RAN device obtains QoE measurement collection configuration information.

In a signaling-based QoE measurement scenario, the RAN obtains, from a CN, the QoE measurement collection configuration information. The QoE measurement collection configuration information delivered by the CN is for a specific UE. For example, the CN sends the QoE measurement collection configuration information to the UE by using an interface message of the RAN for the specific UE. In a management-based QoE measurement scenario, the RAN obtains, from an OAM entity or an EM entity (that is, the OAM in FIG. 2 may also be replaced with EM), the QoE measurement collection configuration information. The QoE measurement collection configuration information delivered by the OAM entity or the EM entity is not for the specific UE. The QoE measurement collection configuration information includes an application layer measurement configuration. For example, during actual application, if the QoE measurement collection configuration information includes one container (container), the application layer measurement configuration is carried in the container. Therefore, the container is also referred to as a container for an application layer measurement configuration.

It should be understood that during actual application, the CN, the OAM entity, or the EM entity may be deployed in a same entity device, or may be deployed in different entity devices. This is not limited in this application.

For example, the QoE measurement collection configuration information obtained by the RAN device may include content fields shown in the Table 1 below.

**Table 1**

| IE/Group Name | Presence | Range | IE type and reference | Semantics description |
|---|---|---|---|---|
| QoE Reference (QoE reference) | Mandatory | | OCTET STRING (SIZE(6)) | QoE Reference, as defined in clause 5.2 of TS 28.405 [x]. It consists of MCC+MNC+QMC ID, where the MCC and MNC are coming with the trace activation request from the management system to identify one PLMN containing the management system, and QMC ID is a 3-bytes Octet String. |
| Service Type (service type) | Mandatory | | ENUMERATED (QMC for DASH streaming, QMC for MTSI, QMC for VR, ...) | This IE indicates the service type of QoE measurements. |
| CHOICE Area Scope of QMC (scope of QoE measurement collection) | Mandatory | | | |
| >Cell based (cell-based range) | | | | |
| >>Cell ID List for QMC | | 1 .. <maxnoofCellIDforQMC> | | |
| >>>NG-RAN CGI | Mandatory | | 9.3.1.73 | |
| >TA based (tracking area-based range) | | | | |
| >>TA List for QMC | | 1 .. <maxnoofTAforQMC> | | |
| >>>TAC | Mandatory | | 9.3.3.10 | The TAI is derived using the current serving PLMN. |
| >TAI based (tracking area identifier-based range) | | | | |
| >>TAI List for QMC | | 1 .. <maxnoofTAforQMC> | | |
| >>>TAI | Mandatory | | 9.3.3.11 | |
| >PLMN area based (public land mobile network-based range) | | | | |
| >>PLMN List for QMC | | 1 .. <maxnoofPLMNforQMC> | | |
| >>>PLMN Identity | Mandatory | | 9.3.3.5 | |
| Measurement Collection Entity IP Address (IP address of the measurement collection entity) | Mandatory | | Transport Layer Address 9.3.2.4 | The IP address of the entity receiving the QoE measurement report. |
| Container for Application Layer Measurement Configuration (container for an application layer measurement configuration) | Optional | | OCTET STRING (SIZE(1.. 8000)) | Contains application layer measurement configuration, see Annex L in 26.247 [xx]. Present in case of initial QoE configuration, and shall be included in Source to Target Transparent Container for signaling-based QMC during NG-based handover IE. |
| Slice Support List for QMC (slice support list for QoE measurement collection) | | 0..1 | | |
| >Slice Support QMC Item | | 1 .. < maxnoofSNSSAIforQMC > | | |
| >>S-NSSAI | Mandatory | | 9.3.1.24 | |
| CHOICE MDT Alignment Information (MDT alignment information) | Optional | | | Indicates the MDT measurements with which alignment is required. |
| >S-based MDT (signaling-based MDT measurement) | | | | |
| >>NG-RAN Trace ID | Mandatory | | OCTET STRING (SIZE(8)) | This IE is composed of the following: Trace Reference defined in TS 32.422 [11] (leftmost 6 octets, with PLMN information encoded as in 9.3.3.1), and Trace Recording Session Reference defined in TS 32.422 [11] (last 2 octets). |
| Available RAN Visible QoE Metrics (available RAN visible QoE measurement quantity or measurement indicator) | Optional | | 9.3.1.xx5 | Present in case of initial QoE configuration and in case of NG-based handover for signaling-based QoE measurement. |

Optionally, the CN or the OAM entity may further notify the RAN device by using the QoE measurement collection configuration information. The RAN device may configure, for the UE, specific RAN visible application layer indicators (or referred to as RAN sensible application layer indicators), namely, available RAN visible QoE metrics in Table 1. For example, the RAN visible application layer indicators may include the following elements:
an average throughput, where the indicator indicates a total quantity of bits received at an application layer of the UE in one measurement gap; and for example, the indicator is applicable to a streaming media service;
an initial playing latency, where the indicator indicates an initial playing latency when a streaming medium starts to be presented; and for example, the indicator may be defined as from a moment at which a first segment of the medium is obtained to a moment at which the streaming medium is extracted from a buffer of a client;
a buffer level, where the indicator indicates playing duration in which media data is available starting from a current playing moment;
a playing latency, where the indicator indicates a playing latency when a streaming medium is started; and for example, the indicator may be specifically defined as a latency from time when a dynamic adaptive streaming over hypertext transfer protocol (Dynamic Adaptive Streaming over HTTP, DASH) player receives a play/back/ start trigger to time when the medium is played;
deterioration duration, where the indicator indicates a gap between Nepal time (Nepal Time, NPT) corresponding to a previous high-quality frame and Nepal time corresponding to a subsequent first high-quality frame before deterioration; and a high-quality frame is a frame that is completely accepted and all parts of a picture corresponding to the frame include correct content, or the frame is a new frame (that is, does not depend on any previously decoded frame) or depends only on a high-quality frame that has been previously decoded;
a quantity of consecutive lost packets, where the indicator indicates a quantity of consecutive lost real-time transport protocol (Real-time Transport Protocol, RTP) packets;
jitter duration, where jitter indicates that a difference between an actual playing moment and an expected playing moment of a frame exceeds a threshold; and the expected playing moment of the frame is a playing moment of a previous playing frame plus (a difference between Nepal time of a current frame and Nepal time of the previous playing frame);
out-of-synchronization duration, where out-of-synchronization indicates that an absolute time difference between a value A and a value B exceeds a specific threshold; the value A herein is a difference between a playing moment of a previous playing frame of a video stream and a playing moment of a previous playing frame of a voice stream; and the value B herein is a difference between an expected playing moment of the previous playing frame of the video stream and an expected playing moment of the previous playing frame of the voice stream;
a round-trip latency, where the indicator indicates round-trip time at an RTP level and an additional latency in two directions (an RTP level->a speaker->a microphone->an RTP level) caused by buffering and other processing in a client;
an average bit rate, where the indicator indicates a bit rate at which valid media information is encoded in a measurement periodicity;
a comparable quality viewport switching latency (comparable quality viewport switching latency), where the indicator reports a latency and a quality-related factor when quality deteriorates due to viewport movement; and the quality-related factor includes a quality ranking value (quality ranking value), a resolution, and the like; and
freezing, where the indicator indicates whether freezing occurs in a video stream playing process or duration of freezing.

It should be understood that elements included in the RAN visible application layer indicator are merely examples for description. During actual application, the RAN visible application layer indicator may alternatively be in another content form. This is not limited in this application.

During actual application, in the QoE measurement collection configuration information, the foregoing "application layer measurement configuration" may not be sent to the RAN device in a form of a container, but may be sent to the RAN device in another RAN sensible form. This is not limited in this application.

Usually, the QoE measurement collection configuration information sent by the CN or the OAM entity to the RAN device may further include a QoE reference (reference) and an address of a measurement collection entity (measurement collection entity, MCE). For example, the address of the MCE may be described by using an IP address of the MCE, or the address of the MCE may be described in another manner. This is not specifically limited herein. The QoE reference is used to identify a specific QoE measurement task initiated by a network (or used to identify a specific QoE measurement task in the RAN device and the MCE) (which may be referred to as a QoE measurement identifier). That is, each QoE measurement task corresponds to one QoE reference, and the QoE reference is a globally unique identifier. For example, the QoE reference may consist of a public land mobile network (public land mobile network, PLMN) and a QoE measurement collection identifier, where the PLMN consists of a mobile country code (mobile country code, MCC) and a mobile network code (mobile network code, MNC), and the QoE measurement collection identifier is allocated by a management system or an operator. The IP address of the MCE is used by a base station to send a corresponding measurement result to the MCE after the RAN device receives the measurement result reported by the UE.

During actual application, in addition to QoE measurement performed on a specific service of the UE, MDT measurement may also be performed on the UE. A QoE measurement task and an MDT task are executed for a same service, and then based on an association relationship between a measurement result of the QoE measurement task and a measurement result of the MDT task, it can be known whether deterioration of the measurement result of the QoE measurement task is caused by signal quality or scheduling on a wireless side, so that a problem can be located.

A basic idea of the MDT technology is that an operator performs measurement by subscribing to a commercial terminal of a user equipment, and sends a measurement result to replace some conventional drive test work, to automatically collect measurement data of the terminal to detect and optimize a problem and a fault in a wireless network. Application scenarios of the technology are as follows: The operator usually performs routine network coverage drive tests every month, and also performs call quality drive tests in some specific areas to address user complaints, where MDT may be used to replace all the tests in these scenarios. An existing MDT technology may include the following several measurement types.
1. Signal level measurement: The UE measures a signal level of a radio signal, and sends a measurement result to a base station or a base station controller.
2. Quality of service (quality of service, QoS) measurement: Usually, QoS measurement (for example, service traffic, a service throughput, or a service latency) is performed by the base station; or may be measured by a UE, for example, an uplink processing latency; or may be jointly processed by the base station and the UE, for example, air interface latency measurement, namely, measurement of time of a data packet from a service data adaptation protocol (service data adaptation protocol, SDAP)/packet data convergence protocol (packet data convergence protocol, PDCP) layer of the base station to an SDAP/PDCP layer of the UE.
3. Accessibility measurement: The UE records information about a radio resource control (Radio Resource Control, RRC) connection establishment failure, and sends the information to the base station or the base station controller.

The MDT includes logged MDT and immediate MDT. The immediate MDT is measurement mainly performed on a UE in an RRC connected state, and the logged MDT is measurement mainly performed on a UE in an idle state or a UE in an RRC inactive state. For example, the logged MDT may be measurement performed by the UE in the idle state or the UE in the inactive state on a cell of a frequency corresponding to a cell on which the UE currently camps and a corresponding inter-frequency/inter-system neighboring cell for cell reselection broadcast in the cell on which the UE currently camps. Usually, the immediate MDT is used to measure a data amount, an IP throughput, a packet transmission latency, a packet loss rate, a processing latency, or the like of the UE. The logged MDT is usually measurement performed by the UE on received signal strength.

Optionally, the QoE measurement collection configuration information sent by the CN or the OAM entity to the RAN device may further include information about a minimization of drive tests (minimization of drive tests, MDT) task associated with the QoE measurement task, that is, indicate that an association between the QoE measurement task and the MDT task needs to be performed, for example, may be a trace identifier (trace ID) corresponding to a signaling-based MDT task (which may also be referred to as an MDT task identifier). Each MDT task corresponds to one trace ID. Specifically, before or at the same time of sending the QoE measurement collection configuration information to the RAN device, the CN or the OAM entity may send, to the RAN device, configuration information of the MDT task corresponding to the trace identifier.

The base station initiates an MDT measurement collection task in two scenarios. One is to initiate signaling-based MDT (signaling-based MDT), and the other is to initiate management-based MDT (management-based MDT). The signaling-based MDT is MDT for a specific UE. The base station receives a message, from a core network (core network, CN), for performing MDT on the specific UE. The management-based MDT is not MDT for a specific UE. The base station receives a message, from the OAM entity or the EM entity, for performing MDT, and the base station selects, according to a specific side policy, a part of UEs from UEs under the base station to perform MDT measurement. For the signaling-based MDT, the CN does not initiate signaling MDT for the UE unless the user has agreed to perform the MDT. For the management-based MDT, when selecting the UE, the base station may consider whether the UE agrees to perform the MDT, for example, select only UEs that agree to perform the MDT to perform MDT measurement (for example, the core network notifies the base station whether a specific UE agrees to perform the MDT). Both the two types of MDT may include the logged MDT and the immediate MDT. For the signaling-based MDT, the CN notifies the base station of some MDT configuration information, trace collection entities (trace collection entities, TCE), or IP addresses of the MCE. The MDT configuration information includes: an MDT activation type (for example, immediate MDT only, logged MDT only, or immediate MDT and trace), a PLMN list of the signaling-based MDT, an MDT area range, an MDT mode, and a configuration parameter (for example, an immediate MDT measurement event, a logged MDT recording gap, and duration) of a corresponding mode. During actual application, the TCE and the MCE may be a same entity device, or may be different entity devices.

202: The RAN device sends the application layer measurement configuration to the UE.

For signaling-based QoE measurement, the RAN device determines, depending on whether the UE supports QoE measurement, whether to configure the QoE measurement for the UE, and then the RAN sends the application layer measurement configuration to the corresponding UE.

For management-based QoE measurement, the RAN device selects, based on the QoE measurement collection configuration information sent by the OAM entity or the EM entity, whether the UE supports the corresponding QoE measurement, and some other factors, an appropriate UE to perform QoE measurement. After selecting the UE, the RAN device sends the application layer measurement configuration to the UE.

The RAN sends, to the UE by using an RRC message, the application layer measurement configuration obtained from the CN, the OAM entity, or the EM entity, where the message also carries a service type corresponding to the application layer measurement configuration, for example, a streaming service (streaming service) or a multimedia telephony service for internet protocol multimedia subsystem (multimedia telephony service for IP multimedia subsystem, MTSI service).

During actual application, in addition to sending the application layer measurement configuration to the UE, the RAN device may further deliver other configuration information (which may be referred to as a RAN visible application layer measurement configuration) to the UE, and indicate the UE to report some application layer indicators in a RAN device sensible or visible form (for example, in an information element form). The application layer indicator may include the RAN device sensible application layer indicator in step 201 above, or may include a comprehensive score of an application layer indicator, a comprehensive score of an access stratum indicator, a comprehensive score obtained by combining the application layer indicator and the access stratum indicator, or an indicator indicating quality of the application layer indicator (where for example, a value may be good, medium, or poor). For example, the RAN device may deliver some thresholds to the UE, and the UE knows, based on an application layer indicator measurement result and some thresholds corresponding to the application layer measurement indicator, an indicator of quality corresponding to the reported application layer indicator measurement result. The RAN device may further configure a reporting periodicity for the UE to report the RAN device visible application layer indicator. When the RAN device does not configure the reporting periodicity, the UE may report the RAN visible application layer indicator when reporting the measurement result corresponding to the application layer measurement configuration. In addition, the RAN device may not need to deliver, to the UE, some configuration information for reporting the application layer indicator sensed by the RAN device. After the UE obtains the application layer indicator, the UE reports, to the RAN device, some application layer indicators that are protocol-specified and can be currently obtained by the UE.

Optionally, in addition to sending the application layer measurement configuration to the UE, the RAN device may further deliver an application layer measurement identifier to the UE. The application layer measurement identifier is generated by the RAN device for the UE, and one application layer measurement identifier corresponds to one application layer measurement configuration configured by the RAN device for the UE, that is, one application layer measurement identifier corresponds to one QoE task. Usually, the application layer measurement identifier corresponds to the QoE reference. The RAN device stores the correspondence between the application layer measurement identifier and the QoE reference.

Optionally, the RAN device sends the application layer measurement configuration and the RAN visible measurement configuration to the UE by using a same RRC message, or may send the application layer measurement configuration and the RAN visible measurement configuration to the UE by using different RRC information. For example, the RAN device first sends the application layer measurement configuration to the UE, and then sends the RAN visible application layer measurement configuration to the UE; or the RAN device first sends the RAN visible application layer measurement configuration to the UE, and then sends the application layer measurement configuration to the UE.

203: The UE executes the QoE measurement task.

After receiving the application layer measurement configuration from the RAN device and the service type corresponding to the application layer measurement configuration, an access stratum (Access Stratum, AS) of the UE sends, to an upper layer of the AS layer of the UE, the application layer measurement configuration from the RAN device and the service type corresponding to the application layer measurement configuration, and the upper layer of the AS layer of the UE executes the corresponding QoE measurement task. After completing the QoE measurement task, the UE obtains the measurement result corresponding to the QoE measurement task. The upper layer of the AS of the UE may be an application layer, or may be a layer for performing QoE measurement.

In addition to sending the application layer measurement configuration to the upper layer of the AS, the AS of the UE may further send, to the upper layer of the AS of the UE, configuration information, of some application layer indicators, that is received from the RAN device and that indicates the UE to report in the RAN sensible form.

204: The UE sends, to the RAN device, the measurement result corresponding to the QoE measurement task.

The UE sends, to the RAN device, the measurement result corresponding to the QoE measurement task. For example, the measurement result may be carried in an uplink RRC message, to reach the RAN device. During actual application, the measurement result may be sent to the RAN device in a container encapsulation form, or may be sent to the RAN device in a non-container encapsulation form. In addition to reporting the measurement result, the UE may further report the application layer measurement identifier corresponding to the measurement result.

205: The RAN device sends, to the MCE, the measurement result corresponding to the QoE measurement task.

After the UE reports, to the RAN device, the measurement result corresponding to the QoE measurement task, the RAN device sends the measurement result to the MCE. For example, when sending the measurement result to the RAN device, the UE carries the application layer measurement identifier corresponding to the measurement result. Therefore, the RAN device determines, based on the locally stored correspondence between the application layer measurement identifier and the QoE reference, the measurement result reported by the UE and the QoE reference corresponding to the application layer measurement identifier. Then, the RAN device finds the IP address of the corresponding MCE based on the QoE reference, and sends the measurement result to the MCE. For another example, the RAN device obtains the corresponding application layer measurement configuration based on the application layer measurement identifier of the UE, and then obtains, based on the QoE measurement collection configuration information delivered by the CN, the OAM entity, or the EM entity, the IP address of the MCE corresponding to the measurement result, to send the measurement result to the MCE.

In addition, the RAN device may optimize a radio resource based on the RAN visible measurement result reported by the UE. For example, when the RAN device senses that a value of a specific application layer indicator in the RAN visible measurement result is not ideal, the RAN device may allocate more resources to the UE, or increase a scheduling priority or the like of a resource of the UE.

Optionally, when the CN, the OAM entity, or the EM entity notifies the RAN device that the MDT measurement result needs to be associated with the measurement result of the QoE measurement task, the CN, the OAM entity, or the EM entity sends indication information indicating, to the RAN device, that the MDT is associated with the QoE. The RAN device configures MDT measurement for the UE (may configure before, after, or at the same time when configuring application layer measurement). After the RAN device receives the MDT measurement result sent by the UE or after the RAN device obtains the MDT measurement result through autonomous measurement, the RAN device sends the MDT measurement result to the TCE; and when sending the measurement result of the QoE measurement task to the MCE, the RAN device carries an MDT measurement identifier. Then, the MCE or the TCE finds, based on the measurement result of the QoE measurement task and the MDT measurement identifier associated with the QoE measurement task, the MDT measurement result associated with the measurement result of the QoE measurement task, to obtain an association relationship between the measurement result of the QoE measurement task and the MDT measurement result.

Step 201 to step 205 are a QoE measurement method when the RAN device is an NR base station in an NR network. However, in an LTE network, one UE can execute only one QoE measurement task through an LTE base station at the same time. Therefore, when configuring a QoE measurement task for the UE, the LTE base station does not need to carry an application layer measurement identifier; and when reporting a QoE measurement result, the UE also does not need to carry the application layer measurement identifier.

During actual application, in a process in which the UE executes the QoE measurement task, cell handover may occur, that is, the UE may be handed over to the currently accessed RAN device. Therefore, when the UE hands over the RAN device to which the UE is connected in the process of executing the QoE measurement task, the RAN device that delivers the application layer measurement configuration information and the RAN device that receives the measurement result may be different RAN devices. When the UE does not hand over the RAN device to which the UE is connected in the process of executing the QoE measurement task, the RAN device that delivers the application layer measurement configuration information and the RAN device that receives the measurement result are usually a same RAN device.

Therefore, in a process in which the UE executes the QoE measurement task configured by the NR base station, when the radio access network (radio access network, RAN) device accessed by the UE is handed over from the new radio (new radio, NR) base station to the long term evolution (long term evolution, LTE) base station, the measurement result subsequently reported by the UE is not reported to the NR base station, but is reported to the LTE base station. During actual application, the LTE base station may be connected to a 4G core network, for example, an evolved packet core network (Evolved packet core, EPC); or may be connected to a 5G core network, for example, a 5th generation core network (5th generation core, 5GC). This is not limited in this application.

Currently, all features of the QoE measurement task in the NR base station may be introduced to the LTE base station by modifying a protocol standard in which the LTE base station works, to implement continuity of the QoE measurement task in a process in which the UE is handed over from the NR base station to the LTE base station. For example, the NR base station supports simultaneous execution of a plurality of QoE measurement tasks for the UE, and the LTE base station supports execution of only one QoE measurement task for the UE at the same time. Therefore, when the RAN device accessed by the UE is handed over from the NR base station to the LTE base station, to enable the LTE base station to simultaneously execute the plurality of QoE measurement tasks for the UE and implement continuation of the QoE measurement tasks, the protocol standard in which the LTE base station works needs to be modified, increasing implementation difficulty and complexity.

In another aspect, after the RAN device accessed by the UE is handed over from the NR base station to the LTE base station, the QoE measurement task executed by the UE in the LTE network is no longer associated with the MDT task in the NR network, thereby affecting efficiency of a problem of locating a service.

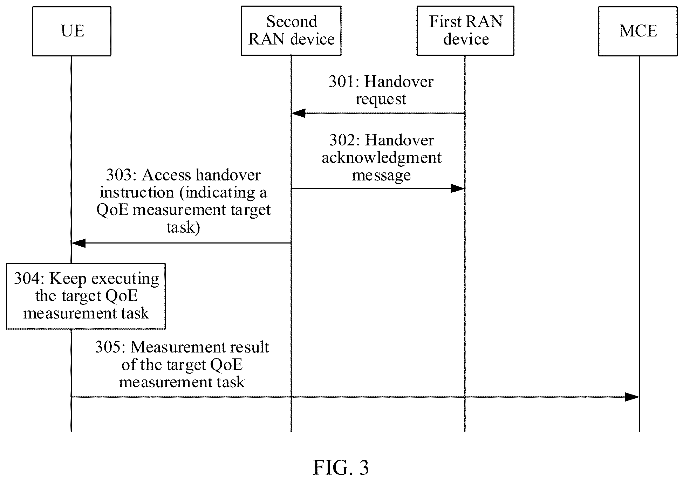

In view of this, this application provides a quality of experience measurement method, a communication apparatus, and a communication device, to improve efficiency of QoE measurement. FIG. 3 is a schematic flowchart of a quality of experience measurement method according to this application. In FIG. 3, an example in which a RAN device (including a first RAN device and a second RAN device) and a UE are used as execution bodies of the interaction diagram is used to illustrate the method. However, the execution body of the interaction diagram is not limited in this application. For example, the RAN device in FIG. 3 may alternatively be a chip, a chip system, or a processor that supports the RAN device to implement the method, or may be a logical node, a logical module, or software that can implement all or some base station functions. The UE in FIG. 3 may alternatively be a chip, a chip system, or a processor that supports the UE to implement the method, or may be a logical node, a logical module, or software that can implement all or some terminal functions. As shown in FIG. 3, the quality of experience measurement method in this application includes the following steps.

301: The first RAN device sends a handover request for the UE to the second RAN device.

The first RAN device sends the handover request for the UE to the second RAN device, to notify that the UE needs to access the second RAN device. In this application, the first RAN device and the second RAN device are RAN devices in different networks. The first RAN device is compatible with a QoE measurement task configured by the second RAN device, that is, the QoE measurement task configured by the second RAN device for the UE can continue to be carried on the first RAN device. However, the second RAN device cannot be fully and completely compatible with the QoE measurement task configured by the first RAN device, that is, the QoE measurement task configured by the first RAN device for the UE cannot continue to be fully and completely carried on the second RAN device. For example, during actual application, the first RAN device may be an NR base station, and the second RAN device may be an LTE base station.

The UE accesses the first RAN device, and the first RAN device configures the QoE measurement task for the UE. There may be one or more QoE measurement tasks configured by the first RAN device for the UE. This is not limited in this application. A QoE measurement procedure may be first initiated by a core network, an OAM entity, or an EM entity, the first RAN device configures the corresponding QoE measurement task for the UE, and then the UE executes the QoE measurement task; or the first RAN device may trigger the QoE measurement task by itself, and configure the corresponding QoE measurement task for the UE, and then the UE executes the QoE measurement task. Specifically, for descriptions of configuring, by the first RAN device, the QoE measurement task for the UE, refer to content of step 201 to step 203 corresponding to FIG. 2. Details are not described herein again.

In a possible implementation, the handover request sent by the first RAN device to the second RAN device may indicate at least one of a first QoE measurement task, a second QoE measurement task, or a third QoE measurement task, the first QoE measurement task is a QoE measurement task that the UE keeps executing and keeps reporting a measurement result for (namely, a target QoE measurement task for which the UE keeps reporting a measurement result) after accessing the second RAN device, the second QoE measurement task is a QoE measurement task that the UE keeps executing and suspends reporting a measurement result for (namely, a target QoE measurement task for which the UE suspends reporting a measurement result) after accessing the second RAN device, and the third QoE measurement task is a QoE measurement task whose execution is canceled by the UE after the UE accesses the second RAN device. In other words, the first RAN device determines and selects specific QoE measurement tasks in QoE measurement tasks configured by the first RAN device for the UE as the first QoE measurement task, the second QoE measurement task, or the third QoE measurement task. Therefore, the second RAN device may determine, by using the handover request from the first RAN device in the QoE measurement tasks configured by the first RAN device for the UE, specific QoE measurement tasks that the UE keeps executing and keeps reporting the measurement result after being handed over to the second RAN device, specific QoE measurement tasks that the UE keeps executing and suspends reporting the measurement result after being handed over to the second RAN device, and specific QoE measurement tasks whose execution is canceled after the UE is handed over to the second RAN device. For example, the handover request sent by the first RAN device to the second RAN device indicates the UE to retain reporting of a measurement result of only one QoE measurement task in a streaming service or an MTSI service after the UE accesses the second RAN device.

Optionally, the handover request sent by the first RAN device to the second RAN device for the UE includes a QoE reference and an address of an MCE that correspond to each QoE measurement task and that are obtained by the first RAN device from the core network, the OAM entity, or the EM entity. Optionally, the handover request further includes an application layer measurement configuration and an application layer measurement identifier that correspond to each QoE measurement task.

302: The second RAN device sends a handover acknowledgment message to the first RAN device.

After receiving the handover request, the second RAN device is allowed to provide an access handover service for the UE, and sends, to the first RAN device, the handover acknowledgment message in response to the handover request.

In a possible implementation, the handover acknowledgment message sent by the second RAN device to the first RAN device may indicate at least one of the first QoE measurement task, the second QoE measurement task, or the third QoE measurement task, the first QoE measurement task is the QoE measurement task that the UE keeps executing and keeps reporting the measurement result for (namely, the target QoE measurement task for which the UE keeps reporting the measurement result) after accessing the second RAN device, the second QoE measurement task is the QoE measurement task that the UE keeps executing and suspends reporting the measurement result for (namely, the target QoE measurement task for which the UE suspends reporting the measurement result) after accessing the second RAN device, and the third QoE measurement task is the QoE measurement task whose execution is canceled by the UE after the UE accesses the second RAN device. Usually, the second RAN device explicitly indicates at least one of the first QoE measurement task, the second QoE measurement task, or the third QoE measurement task in an interface message between the first RAN device and the second RAN device, that is, the first RAN device may sense the indication.

In other words, the second RAN device determines and selects specific QoE measurement tasks in the QoE measurement tasks configured by the first RAN device for the UE as the first QoE measurement task, the second QoE measurement task, or the third QoE measurement task. Therefore, the first RAN device may determine, by using the handover acknowledgment message from the second RAN device in the QoE measurement tasks configured by the first RAN device for the UE, specific QoE measurement tasks that the UE keeps executing and keeps reporting the measurement result after being handed over to the second RAN device, specific QoE measurement tasks that the UE keeps executing and suspends reporting the measurement result after being handed over to the second RAN device, and specific QoE measurement tasks whose execution is canceled after the UE is handed over to the second RAN device. For example, the handover acknowledgment message sent by the second RAN device to the first RAN device indicates the UE to retain reporting of a measurement result of only one QoE measurement task in the streaming service or the MTSI service after the UE accesses the second RAN device.

It can be learned from the foregoing that in this application, the specific QoE measurement tasks in the QoE measurement tasks configured by the first RAN device for the UE as the first QoE measurement task, the second QoE measurement task, or the third QoE measurement task may be determined and selected by the first RAN device, or may be determined and selected by the second RAN device.

During actual application, the handover acknowledgment message further carries an RRC message configured by the second RAN device for the UE. The RRC message carries a target cell identifier and radio parameter information configured by the second RAN device for the UE. The RRC message is carried in a form of a container, that is, the first RAN device does not need to sense a specific meaning of content carried in the container.

303: The first RAN device sends an access handover instruction to the UE, where the access handover instruction indicates the target QoE measurement task.

For example, during actual application, the access handover instruction may be an RRC message generated by the first RAN device. The RRC message may carry configuration information generated by the first RAN device and the RRC message (carried in the form of the container) configured by the second RAN device for the UE.

The target QoE measurement task is a QoE measurement task that the UE keeps executing after accessing the second RAN device. In this application, the first RAN device and the second RAN device may determine, in the QoE measurement tasks configured by the first RAN device for the UE, specific QoE measurement tasks that belong to the target QoE measurement task, namely, specific QoE measurement tasks that the UE may keep executing after accessing the second RAN device. Therefore, after determining and selecting the target QoE measurement task, the first RAN device or the second RAN device indicates the target QoE measurement task by using the access handover instruction. Specifically, the access handover instruction includes first indication information, the first indication information indicates at least one of the first QoE measurement task, the second QoE measurement task, or the third QoE measurement task, the first QoE measurement task is the QoE measurement task that the UE keeps executing and keeps reporting the measurement result for (namely, the target QoE measurement task for which the UE keeps reporting the measurement result) after accessing the second RAN device, the second QoE measurement task is the QoE measurement task that the UE keeps executing and suspends reporting the measurement result for (namely, the target QoE measurement task for which the UE suspends reporting the measurement result) after accessing the second RAN device, and the third QoE measurement task is the QoE measurement task whose execution is canceled by the UE after the UE accesses the second RAN device. The UE only needs to determine the target QoE measurement task based on the indication of the access handover instruction, thereby improving efficiency of performing QoE measurement by the UE, and reducing computing load of the UE. For example, the first indication information is a part of the configuration information generated by the first access network device in the access handover instruction, and is not included in the RRC message configured by the second RAN device for the UE.

For example, the first indication information may include an application layer measurement identifier corresponding to the target QoE measurement task; or the first indication information may include an application layer measurement identifier corresponding to the QoE measurement task whose execution is canceled, and in this case, the UE obtains the application layer measurement identifier corresponding to the QoE measurement task whose execution is canceled, and may determine that a remaining QoE measurement task whose execution is canceled, other than the QoE measurement task whose execution needs to be canceled in the QoE measurement tasks configured by the first RAN device for the UE, is the target QoE measurement task; or the first indication information may include an application layer measurement identifier corresponding to the target QoE measurement task and an application layer measurement identifier corresponding to the QoE measurement task whose execution is canceled.

In a possible implementation, the access handover instruction includes third indication information, and the third indication information indicates the UE to cancel reporting a RAN device visible measurement result. In a scenario in which the first RAN device is an NR base station and the second RAN device is an LTE base station, the LTE base station cannot sense a RAN device visible measurement result. As a result, it is meaningless to report the RAN device visible measurement result to the second RAN device, and the third indication information may indicate the UE to cancel reporting the RAN device visible measurement result, so that workload of the UE is reduced, and efficiency of performing QoE measurement by the UE is improved. In another aspect, the third indication information may further indicate the UE to cancel executing a RAN visible measurement task. For example, the third indication information is a part of the configuration information generated by the first access network device in the access handover instruction, and is not included in the RRC message configured by the second RAN device for the UE.

304: After accessing the second RAN device, the UE keeps executing the target QoE measurement task based on the indication of the access handover instruction.

After receiving the handover instruction, the UE is handed over to the second RAN device. Because the handover instruction indicates the target QoE measurement task, after accessing the second RAN device, the UE keeps executing the target QoE measurement task indicated by the access handover instruction. The foregoing is the indication indicating an AS of the UE to receive the handover instruction from the first RAN device. For the third QoE measurement task, the AS of the UE sends indication information to an upper layer of the AS of the UE, to indicate to cancel the third QoE measurement task.

For the second QoE measurement task, if the UE generates the measurement result of the second QoE measurement task, the UE may store the measurement result at the upper layer of the AS of the UE or the AS of the UE.

In this application, after the UE is handed over from the first RAN device to the second RAN device, the UE may select, from the QoE measurement task configured by the first RAN device for the UE, the target QoE measurement task that keeps being executed. Because the target QoE measurement task is a QoE measurement task that meets a protocol standard in which the second RAN device works, the protocol standard in which the second RAN device works does not need to be modified, thereby implementing continuity of QoE measurement, and also improving efficiency of the QoE measurement task.

305: The UE sends a measurement result of the target QoE measurement task to the second RAN device.

The target QoE measurement task may be divided into the first QoE measurement task and the second QoE measurement task, the first QoE measurement task is the QoE measurement task that the UE keeps executing and keeps reporting the measurement result for (namely, the target QoE measurement task for which the UE keeps reporting the measurement result) after accessing the second RAN device, and the second QoE measurement task is the QoE measurement task that the UE keeps executing and suspends reporting the measurement result for (namely, the target QoE measurement task for which the UE suspends reporting the measurement result) after accessing the second RAN device. Therefore, when executing the first QoE measurement task in the target QoE measurement task, the UE generates the measurement result, and may send, to the second RAN device, the measurement result corresponding to the target QoE measurement task (the first QoE measurement task).

Optionally, when the first QoE measurement task includes only one QoE measurement task, and the UE sends, to the second RAN device, the measurement result corresponding to the first QoE measurement task, the UE does not need to send, to the second RAN device, an application layer measurement identifier corresponding to the first QoE measurement task. After the second RAN device receives the measurement result sent by the UE, because the second RAN device can know a specific measurement task that the first QoE measurement task of the UE is (for example, select based on the decision of the first RAN device or the decision of the second RAN device described above), the second RAN device can still learn of a QoE reference and an address of the MCE that correspond to the first QoE measurement task, so that the second RAN device sends, to the MCE, the measurement result corresponding to the first QoE measurement task. Optionally, the second RAN device further sends, to the MCE, the QoE reference corresponding to the first QoE measurement task.

During actual application, the measurement results of the QoE measurement tasks received by the first RAN device and the second RAN device need to be reported to a QoE measurement collection device (namely, the MCE). In a possible implementation, QoE measurement collection devices corresponding to the first RAN device and the second RAN device may be the same, or may be different. When the first RAN device sends the handover request to the second RAN device, the handover request includes an address of a first QoE measurement collection device and an address of a second QoE measurement collection device. For the address of the first QoE measurement collection device and the address of the second QoE measurement collection device in the first RAN device, the CN, the OAM entity, or the EM entity includes the address of the first QoE measurement collection device and the address of the second QoE measurement collection device in QoE measurement collection configuration information when initiating QoE measurement, and sends the configuration information to the first RAN device. The first QoE measurement collection device is configured to collect the measurement result of the QoE measurement task from the first RAN device, and the second QoE measurement collection device is configured to collect the measurement result of the QoE measurement task from the second RAN device. Therefore, after the UE is handed over to the second RAN device, the second RAN device receives the measurement result, of the target QoE measurement task, reported by the UE, and the second RAN device sends the measurement result (for example, the measurement result carried in the form of the container) of the target QoE measurement task to the second QoE measurement collection device based on the address of the second QoE measurement collection device. The QoE measurement collection device corresponding to the first RAN device and the QoE measurement collection device corresponding to the second RAN device are distinguished, thereby improving management efficiency of the measurement result of the QoE measurement task.

In a possible implementation, if the UE is handed over to a third RAN device again after accessing the second RAN device, the UE may send a QoE measurement record to the third RAN device, where the QoE measurement record indicates at least one of the first QoE measurement task, the second QoE measurement task, or the third QoE measurement task, the QoE measurement record is used, so that the third RAN device can determine execution of the QoE measurement task configured by the first RAN device for the UE, to perform subsequent processing on the QoE measurement task configured by the first RAN device for the UE, thereby improving efficiency of QoE measurement. During actual application, the third RAN device may be an NR base station or an LTE base station. For example, if the second RAN device is an LTE base station, and the third RAN device is an NR base station, the third RAN device may indicate the UE to resume reporting of the measurement result of the QoE measurement task that is kept being executed, but suspend reporting the measurement result, or indicate the UE to re-execute the QoE measurement task whose execution is canceled, and report the corresponding measurement result.

In a possible implementation, if the UE is handed over to the third RAN device again after accessing the second RAN device, the second RAN device may send a QoE measurement record to the third RAN device, where the QoE measurement record indicates at least one of the first QoE measurement task, the second QoE measurement task, or the third QoE measurement task.

In a possible implementation, if the UE is handed over to the third RAN device again after accessing the second RAN device, for the second QoE measurement task, if the UE stores the measurement result of the second QoE measurement task, the UE sends indication information to the third RAN device, to indicate that the UE has the measurement result of the second QoE measurement task. Descriptions of the third RAN device are the same as those provided above.

It should be noted that in step 305, that the UE sends the measurement result of the target QoE measurement task to the second RAN device is optional.

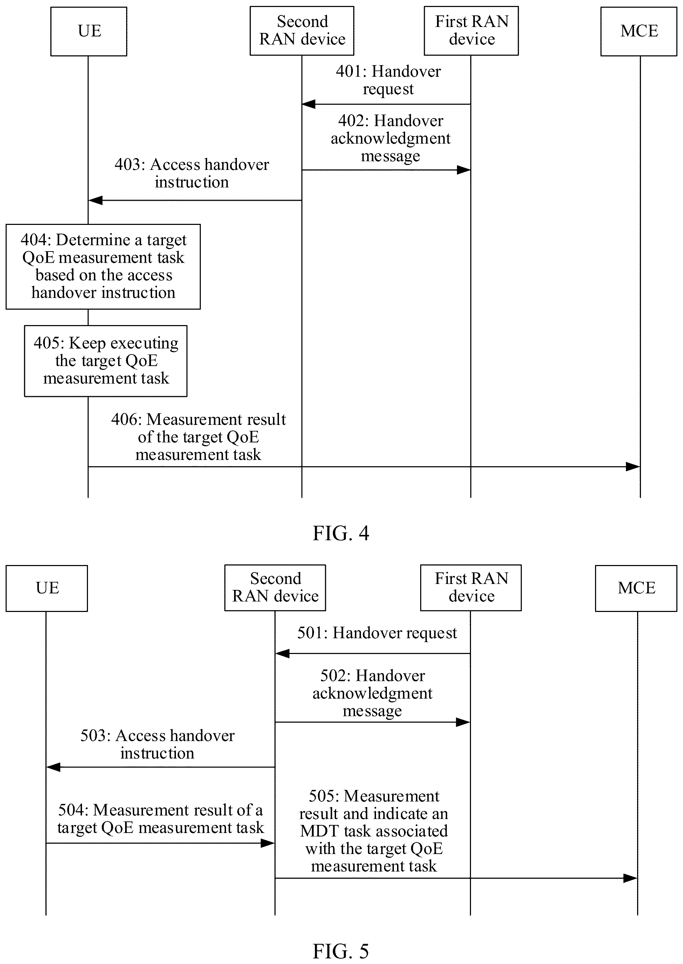

FIG. 4 is another schematic flowchart of a quality of experience measurement method according to this application. In FIG. 4, an example in which a RAN device (including a first RAN device and a second RAN device) and a UE are used as execution bodies of the interaction diagram is used to illustrate the method. However, the execution body of the interaction diagram is not limited in this application. For example, the RAN device in FIG. 4 may alternatively be a chip, a chip system, or a processor that supports the RAN device to implement the method, or may be a logical node, a logical module, or software that can implement all or some base station functions. The UE in FIG. 4 may alternatively be a chip, a chip system, or a processor that supports the UE to implement the method, or may be a logical node, a logical module, or software that can implement all or some terminal functions. As shown in FIG. 4, the quality of experience measurement method in this application includes the following steps.

401: The first RAN device sends a handover request for the UE to the second RAN device.

In this application, the first RAN device and the second RAN device are RAN devices in different networks. The first RAN device is compatible with a QoE measurement task configured by the second RAN device, that is, the QoE measurement task configured by the second RAN device for the UE can continue to be carried on the first RAN device. However, the second RAN device cannot be fully and completely compatible with the QoE measurement task configured by the first RAN device, that is, the QoE measurement task configured by the first RAN device for the UE cannot continue to be fully and completely carried on the first RAN device. For example, during actual application, the first RAN device may be an NR base station, and the second RAN device may be an LTE base station.

The UE accesses the first RAN device, and the first RAN device configures the QoE measurement task for the UE. There may be one or more QoE measurement tasks configured by the first RAN device for the UE. This is not limited in this application. A QoE measurement procedure may be first initiated by a core network, an OAM entity, or an EM entity, the first RAN device configures the corresponding QoE measurement task for the UE, and then the UE executes the QoE measurement task; or the first RAN device may trigger the QoE measurement task by itself, and configure the corresponding QoE measurement task for the UE, and then the UE executes the QoE measurement task. Specifically, for descriptions of configuring, by the first RAN device, the QoE measurement task for the UE, refer to content of step 201 to step 203 corresponding to FIG. 2. Details are not described herein again.

402: The second RAN device sends a handover acknowledgment message to the first RAN device.

After receiving the handover request, the second RAN device is allowed to provide an access handover service for the UE, and sends, to the first RAN device, the handover acknowledgment message in response to the handover request. During actual application, the handover acknowledgment message further carries an RRC message configured by the second RAN device for the UE. The RRC message carries a target cell identifier and radio parameter information configured by the second RAN device for the UE. The RRC message is carried in a form of a container.

403: The first RAN device sends an access handover instruction to the UE.

After receiving the access handover instruction from the first RAN device, the UE accesses the second RAN device based on the access handover instruction.

404: The UE determines a target QoE measurement task based on the access handover instruction.

In this application, after receiving the access handover instruction, the UE may autonomously determine, in the QoE measurement task configured by the first RAN device for the UE, the target QoE measurement task that needs to be kept being executed.

In a possible implementation, the first RAN device may include second indication information in the access handover instruction, the second indication information indicates a third QoE measurement task, and the third QoE measurement task is a QoE measurement task whose execution is canceled by the UE after the UE accesses the second RAN device. Therefore, the UE knows the QoE measurement task (namely, the third QoE measurement task) whose execution needs to be canceled for in the QoE measurement task configured by the first RAN device for the UE. Specifically, after the UE accesses the second RAN device or after the UE receives the access handover instruction, the UE may sense, by using a communication protocol between the UE and the second RAN device, a QoE measurement task that is not supported by the second RAN device. Therefore, the UE may determine, as the target QoE measurement task, a QoE measurement task that is other than the third QoE measurement task in the QoE measurement task configured by the first RAN device for the UE and that is capable of being supported by the second RAN device. The UE autonomously determines the target QoE measurement task, so that an amount of information exchange between the first RAN device and the second RAN device is reduced, and handover efficiency of the UE to the RAN device is improved. For example, the third indication information is a part of configuration information generated by the first access network device in the access handover instruction, and is not included in the RRC message configured by the second RAN device for the UE.

For example, assuming that in a scenario in which the first RAN device is an NR base station and the second RAN device is an LTE base station, in addition to the third QoE measurement task indicated by the second indication information carried in the access handover instruction, the QoE measurement task configured by the first RAN device for the UE further includes a QoE measurement task of a streaming service (streaming service), a QoE measurement task of an MTSI service, and a QoE measurement task of a virtual reality (Virtual Reality, VR) service. Because the UE knows that in an LTE network, the LTE base station does not support the QoE measurement task of the VR service, the UE may determine the QoE measurement task of the streaming service (streaming service) and the QoE measurement task of the MTSI service as the target QoE measurement task.

In a possible implementation, the access handover instruction sent by the first RAN device to the UE does not carry the second indication information. After the UE accesses the second RAN device or after the UE receives the access handover instruction, the UE may sense, by using a communication protocol between the UE and the second RAN device, a QoE measurement task that is not supported by the second RAN device. Therefore, the UE may determine, as the target QoE measurement task, a QoE measurement task that is in the QoE measurement task configured by the first RAN device for the UE and that is capable of being supported by the second RAN device. The first RAN device does not need to modify or extend a conventional access handover instruction, the UE accesses the second RAN device in an existing RAN device handover manner, and then the UE autonomously determines the target QoE measurement task, so that an amount of information exchange between the first RAN device and the second RAN device is reduced, and handover efficiency of the UE to the RAN device is improved.

In a scenario in which the first RAN device is an NR base station and the second RAN device is an LTE base station, the LTE base station can support only one QoE measurement task for one UE at the same time, and report a measurement result of the QoE measurement task. In a possible implementation, when there is one target QoE measurement task determined by the UE, and the target QoE measurement task is capable of being exactly supported by the second RAN device used as the LTE base station, the UE may keep reporting a measurement result of the target QoE measurement task, that is, the target QoE measurement task is a first QoE measurement task in this application.

In a possible implementation, when there are a plurality of target QoE measurement tasks determined by the UE, and these target QoE measurement tasks are incapable of being simultaneously supported by the second RAN device used as the LTE base station, the UE may suspend reporting measurement results of all the target QoE measurement tasks, that is, these target QoE measurement tasks are second QoE measurement tasks in this application.

For example, if the target QoE measurement task includes only one QoE measurement task of the streaming service, because the second RAN device can support the QoE measurement task of the streaming service, the UE keeps reporting a measurement result of the QoE measurement task of the streaming service; or if the target QoE measurement task includes one QoE measurement task of the streaming service and one QoE measurement task of the MTSI service, the UE suspends reporting measurement results of the two target QoE measurement tasks.

In a possible implementation, the access handover instruction sent by the first RAN device to the UE does not carry the second indication information. After the UE accesses the second RAN device or after the UE receives the access handover instruction, the UE stores all QoE measurement tasks configured by the first RAN device for the UE, and suspends reporting measurement results of all these QoE measurement tasks. That is, all the QoE measurement tasks configured by the first RAN device for the UE are target QoE measurement tasks. In addition, all the target QoE measurement tasks are second QoE measurement tasks. The second QoE measurement task is a QoE measurement task that the UE keeps executing and suspends reporting a measurement result for (namely, a target QoE measurement task for which the UE suspends reporting a measurement result) after accessing the second RAN device. Therefore, after accessing the second RAN device, the UE may continue to execute all the QoE measurement tasks, and report QoE measurement results when the QoE measurement results can be subsequently reported.

In a possible implementation, the access handover instruction sent by the first RAN device to the UE carries the second indication information. After the UE accesses the second RAN device or after the UE receives the access handover instruction, the UE stores QoE measurement tasks other than the third QoE measurement task indicated by the second indication information in all the QoE measurement tasks configured by the first RAN device for the UE, and suspends reporting measurement results of all these QoE measurement tasks. That is, the QoE measurement tasks other than the third QoE measurement task in all the QoE measurement tasks configured by the first RAN device for the UE are target QoE measurement tasks. In addition, all the target QoE measurement tasks are second QoE measurement tasks. The second QoE measurement task is a QoE measurement task that the UE keeps executing and suspends reporting the measurement result for (namely, the target QoE measurement task for which the UE suspends reporting the measurement result) after accessing the second RAN device. Therefore, after accessing the second RAN device, the UE may continue to execute all the target QoE measurement tasks, and report QoE measurement results when the QoE measurement results can be subsequently reported.

405: The UE keeps executing the target QoE measurement task.

406: The UE sends the measurement result of the target QoE measurement task to the second RAN device.

An implementation of step 406 is similar to that of step 305 corresponding to FIG. 3. For details, refer to descriptions of step 305. Details are not described herein again.

Optionally, when the first QoE measurement task includes only one QoE measurement task, and the UE sends, to the second RAN device, the measurement result corresponding to the first QoE measurement task, the UE does not need to send, to the second RAN device, an application layer measurement identifier corresponding to the first QoE measurement task. After the second RAN device receives the measurement result sent by the UE, because the second RAN device can know a specific measurement task that the first QoE measurement task of the UE is (for example, the second base station and the UE may use a same rule to determine a specific QoE measurement task as the first QoE measurement task), the second RAN device can still learn of a QoE reference and an address of an MCE that correspond to the first QoE measurement task, so that the second RAN device sends, to the MCE, the measurement result corresponding to the first QoE measurement task. Optionally, the second RAN device further sends, to the MCE, the QoE reference corresponding to the first QoE measurement task.

FIG. 5 is another schematic flowchart of a quality of experience measurement method according to this application. In FIG. 5, an example in which a RAN device (including a first RAN device and a second RAN device) and a UE are used as execution bodies of the interaction diagram is used to illustrate the method. However, the execution body of the interaction diagram is not limited in this application. For example, the RAN device in FIG. 5 may alternatively be a chip, a chip system, or a processor that supports the RAN device to implement the method, or may be a logical node, a logical module, or software that can implement all or some base station functions. The UE in FIG. 5 may alternatively be a chip, a chip system, or a processor that supports the UE to implement the method, or may be a logical node, a logical module, or software that can implement all or some terminal functions. As shown in FIG. 5, the quality of experience measurement method in this application includes the following steps.

501: The first RAN device sends a handover request to the second RAN device.

Optionally, before step 501, for descriptions of configuring, by the first RAN device, a QoE measurement task for the UE, refer to content of step 201 to step 203 corresponding to FIG. 2. Details are not described herein again. If an association between MDT and QoE measurement needs to be performed for a specific QoE measurement task, the first RAN device also initiates an MDT task corresponding to the QoE measurement.

The first RAN device sends the handover request to the second RAN device, where the handover request includes fourth indication information, the fourth indication information indicates a first MDT task and a second MDT task associated with a same QoE measurement task, the first MDT task is an MDT task associated with the QoE measurement task when the UE accesses the first RAN device, and the second MDT task is an MDT task associated with the QoE measurement task when the UE accesses the second RAN device. For example, the fourth indication information is an MDT task identifier of the first MDT task and an MDT task identifier of the second MDT task. The first MDT task is the MDT task associated with the QoE measurement task when the UE accesses the first RAN device. In other words, the first MDT task is an MDT task associated with the QoE measurement task when the UE accesses a RAN device (including the first RAN device) of a same type as the first RAN device. For example, the first MDT task is an MDT task associated with the QoE measurement task when the UE accesses an NR base station. Similarly, the second MDT task is the MDT task associated with the QoE measurement task when the UE accesses the second RAN device. In other words, the second MDT task is an MDT task associated with the QoE measurement task when the UE accesses a RAN device (including the second RAN device) of a same type as the second RAN device. For example, the second MDT task is an MDT task associated with the QoE measurement task when the UE accesses an LTE base station. It should be noted that in the foregoing descriptions, the first MDT task and the second MDT task that are associated with the same QoE measurement task only mean that some QoE measurement tasks need to be associated with the MDT, and does not mean that all QoE measurement tasks sent by the first RAN device to the second RAN device need to be associated with the MDT. That is, the fourth indication information is for a specific QoE measurement task.

The fourth indication information in the first RAN device is obtained by a CN, an OAM entity, or an EM entity. Specifically, the CN, the OAM entity, or the EM entity may carry the fourth indication information when sending the QoE measurement collection configuration information to the first RAN device.

502: The second RAN device sends a handover acknowledgment message to the first RAN device.

After receiving the handover request, the second RAN device is allowed to provide an access handover service for the UE, and sends, to the first RAN device, the handover acknowledgment message in response to the handover request.

503: The first RAN device sends an access handover instruction to the UE.

The first RAN device sends the access handover instruction to the UE, to indicate the UE to be handed over to the second RAN device. Specifically, a process in which the UE is handed over from the first RAN device to the second RAN device may be a conventional procedure in which the UE is handed over to the RAN device; or may be a procedure in which the UE is handed over to the second RAN device in the embodiment corresponding to FIG. 3 in this application (for details, refer to step 301 to step 304), to keep executing a target QoE measurement task; or may be a procedure in which the UE is handed over to the second RAN device in the embodiment corresponding to FIG. 4 in this application (for details, refer to step 401 to step 405), to keep executing the target QoE measurement task.

During actual application, the access handover instruction further carries configuration information of the second MDT task configured by the second RAN device for the UE. After accessing the second RAN device, the UE executes the MDT task based on the configuration information of the second MDT task.

The following uses an example in which the UE determines the target QoE measurement task for description.

504: The UE sends a measurement result of the target QoE measurement task to the second RAN device.

The measurement result, of the target QoE measurement task, sent by the UE to the second RAN device may carry an application layer measurement identifier corresponding to the target QoE measurement task. After receiving the measurement result of the target QoE measurement task and the application layer measurement identifier corresponding to the target QoE measurement task, the second RAN device may determine a specific QoE measurement task to which the measurement result belongs. Because the fourth indication information indicates the first MDT task and the second MDT task that are associated with each QoE measurement task, the second RAN device may determine, based on the fourth indication information, the second MDT task corresponding to the target QoE measurement task. In this way, even after the UE is handed over from the first RAN device to the second RAN device, the QoE measurement task is still associated with the MDT task. This facilitates a problem of continuing to locate a service.

505: The second RAN device sends the measurement result of the target QoE measurement task to an MCE.

The second RAN device sends, to the MCE, the measurement result of the target QoE measurement task and an identifier (for example, a trace ID) of the second MDT task associated with the target QoE measurement task. Optionally, the second RAN device further sends a QoE reference of the target QoE measurement task.

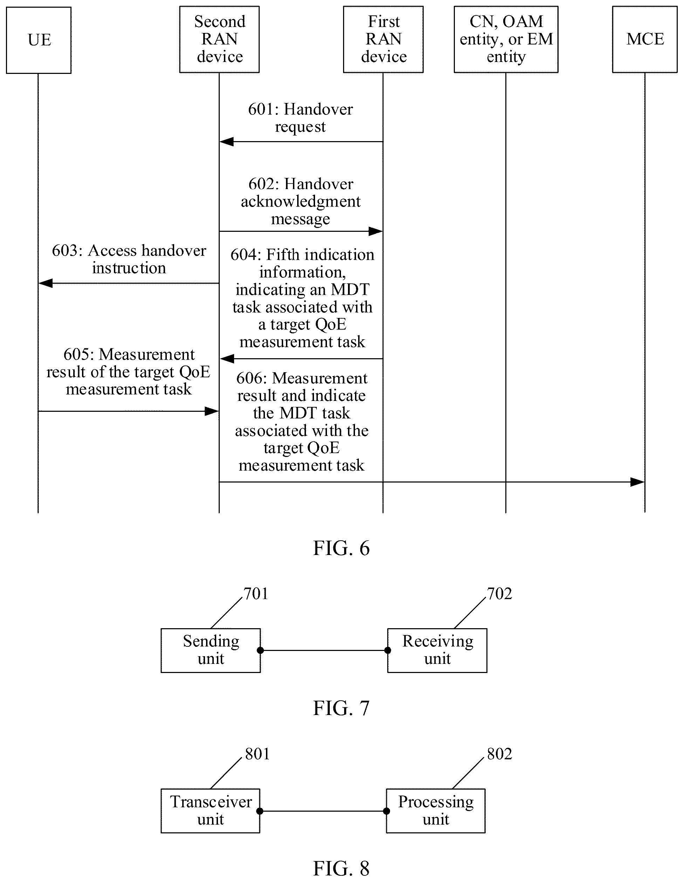

FIG. 6 is another schematic flowchart of a quality of experience measurement method according to this application. In FIG. 6, an example in which a RAN device (including a first RAN device and a second RAN device) and a UE are used as execution bodies of the interaction diagram is used to illustrate the method. However, the execution body of the interaction diagram is not limited in this application. For example, the RAN device in FIG. 6 may alternatively be a chip, a chip system, or a processor that supports the RAN device to implement the method, or may be a logical node, a logical module, or software that can implement all or some base station functions. The UE in FIG. 6 may alternatively be a chip, a chip system, or a processor that supports the UE to implement the method, or may be a logical node, a logical module, or software that can implement all or some terminal functions. As shown in FIG. 6, the quality of experience measurement method in this application includes the following steps.

601: The first RAN device sends a handover request to the second RAN device.

Optionally, before step 601, for descriptions of configuring, by the first RAN device, a QoE measurement task for the UE, refer to content of step 201 to step 203 corresponding to FIG. 2. Details are not described herein again. If an association between MDT and QoE measurement needs to be performed for a specific QoE measurement task, the first RAN device also initiates an MDT task corresponding to the QoE measurement.

Optionally, the handover request includes indication information #A, and the indication information #A indicates a first MDT task associated with the QoE measurement task. For example, the indication information #A is an MDT task identifier of the first MDT task. The first MDT task is an MDT task associated with the QoE measurement task when the UE accesses the first RAN device.

602: The second RAN device sends a handover acknowledgment message to the first RAN device.

After receiving the handover request, the second RAN device is allowed to provide an access handover service for the UE, and sends, to the first RAN device, the handover acknowledgment message in response to the handover request.

603: The first RAN device sends an access handover instruction to the UE.

Step 602 and step 603 are similar to the implementation of step 502 and step 503 corresponding to FIG. 5. For details, refer to descriptions of step 502 and step 503. Details are not described herein again.

604: The second RAN device obtains fifth indication information.

The second RAN device obtains the fifth indication information, where the fifth indication information indicates a second MDT task associated with a target QoE measurement task. Specifically, the second RAN device may first send a QoE reference corresponding to the target QoE measurement task to a CN, an OAM entity, or an EM entity. In this case, the CN, the OAM entity, or the EM entity sends the fifth indication information to the second RAN device based on the QoE reference, and the fifth indication information indicates the second MDT task associated with the target QoE measurement task. The second MDT task is an MDT task associated with the QoE measurement task when the UE accesses the second RAN device. For example, the second RAN device learns, based on the indication information #A carried in the handover request in step 601, that the target QoE measurement task needs to be associated with the MDT task. Therefore, the second RAN device sends the QoE reference corresponding to the target QoE measurement task to the CN, the OAM entity, or the EM entity. In this case, the CN, the OAM entity, or the EM entity sends the fifth indication information to the second RAN device based on the QoE reference.

605: The UE sends a measurement result of the target QoE measurement task to the second RAN device.

606: The second RAN device sends the measurement result of the target QoE measurement task to an MCE.

Step 605 and step 606 are similar to the implementation of step 504 and step 505 corresponding to FIG. 5. For details, refer to descriptions of step 504 and step 505. Details are not described herein again.

It can be learned from the foregoing that during actual application, the RAN device may further deliver a RAN visible application layer measurement configuration to the UE, and indicate the UE to report some application layer indicators in a RAN device sensible or visible form (for example, in an information element form), which is also referred to as indicating the UE to report RAN visible application layer measurement results corresponding to some application indicators. The application layer indicators may include the RAN device sensible application layer indicators in step 201. Details are not described herein again.

Optionally, the UE (for example, an upper layer of an AS of the UE) may obtain, based on a measurement gap of RAN visible application layer measurement, a RAN visible application layer indicator measurement result. For example, when the RAN visible application layer indicator is at a buffer level, and the RAN visible application layer measurement configuration indicates the UE to report the buffer level in a RAN visible form, the RAN visible application layer measurement configuration includes indication information #B, indicating a maximum quantity of entities of the buffer level reported in the RAN visible application layer measurement. The upper layer of the AS layer of the UE may also use the maximum quantity of entities to compute the measurement gap for the buffer level in the RAN visible application layer measurement. For example, the measurement gap is a RAN visible application layer reporting periodicity divided by the maximum quantity of entities. The RAN visible application layer reporting periodicity may be indicated in the RAN visible application layer measurement configuration; or when the RAN visible application layer measurement configuration does not indicate the RAN visible application layer reporting periodicity, the RAN visible application layer reporting periodicity is a reporting periodicity indicated in a container for an application layer measurement configuration (a reporting periodicity corresponding to a container for an application layer measurement result).

To reduce transmission overheads between the UE and the RAN device caused by reporting, by the UE, the RAN visible application layer indicator measurement result, the RAN device may configure, for the UE, an event for reporting the RAN visible application layer indicator measurement result, and determine, depending on whether the event is triggered, whether the UE reports the RAN visible application layer measurement result of the application layer indicator. When a plurality of RAN visible application layer indicator measurement results of a specific application layer indicator meet the event, the UE reports the RAN visible application layer measurement results of the application layer indicator; otherwise, the UE does not report the RAN visible application layer measurement results of the application layer indicator; or when a plurality of RAN visible application layer indicator measurement results of a specific application layer indicator meet the event, the UE does not report the RAN visible application layer measurement results of the application layer indicator; otherwise, the UE reports the RAN visible application layer measurement results of the application layer indicator.

For example, whether the plurality of measurement results of the application layer indicator exceed a threshold may be used as an event, or whether the plurality of measurement results of the application layer indicator are lower than a threshold may be used as an event. The threshold may be notified by the RAN device to the UE in RAN visible application layer measurement configuration information, or may be a value specified in advance, or a value determined by the UE.

For example, that a plurality of measurement results of a specific application layer indicator meet the event may include but is not limited to the following manners:
Manner 1: An average value of the plurality of measurement results meets the event.
Manner 2: A maximum value in the plurality of measurement results meets the event.
Manner 3: A minimum value in the plurality of measurement results meets the event.
Manner 4: Only one of the plurality of measurement results meets the event.
Manner 5: All measurement results in the plurality of measurement results meet the event.
Manner 6: All N2 measurement results in N1 measurement results in the plurality of measurement results meet the event, where values of N1 and N2 may be notified by the RAN device to the UE in the RAN visible application layer measurement configuration information, or may be values specified in advance, or values determined by the UE, and N1 is greater than or equal to N2.
Manner 7: All N3 measurement results in the plurality of measurement results meet the event, where a value of N3 may be notified by the RAN device to the UE in the RAN visible application layer measurement configuration information, or may be a value specified in advance, or a value determined by the UE.
Manner 8: All X consecutive measurement results in the plurality of measurement results meet the event, where a value of X may be notified by the RAN device to the UE in the RAN visible application layer measurement configuration information, or may be a value specified in advance, or a value determined by the UE.
Manner 9: All Y measurement results in latest X measurement results in the plurality of measurement results meet the event, where values of X and Y may be notified by the RAN device to the UE in the RAN visible application layer measurement configuration information, or may be values specified in advance, or values determined by the UE, and X is greater than or equal to Y.

The foregoing plurality of measurement results may be all measurement results in a time period period T, where T may be notified by the RAN device to the UE in the RAN visible application layer measurement configuration information (for example, the reporting periodicity or the measurement periodicity of the RAN visible application layer measurement), or may be a value specified in advance, or a value determined by the UE.

Alternatively, the foregoing plurality of measurement results are N measurement results, where a value of N may be notified by the RAN device to the UE in the RAN visible application layer measurement configuration information (for example, the maximum quantity of entities indicated in the indication information #B), or may be a value specified in advance, or a value determined by the UE.

Alternatively, the foregoing plurality of measurement results are measurement results included in one piece of measurement result information received by the AS of the UE from the upper layer of the AS of the UE.

Optionally, after the UE receives the event from the RAN device, the AS of the UE sends a configuration of the event to the upper layer of the AS of the UE.

The UE determines whether to report RAN visible application layer indicator measurement results, that is, determines whether a plurality of measurement results of a specific application layer indicator meet a corresponding event.

When the plurality of measurement results of the specific application layer indicator meet the event corresponding to the application layer indicator, the UE reports the RAN visible application layer indicator measurement results corresponding to the application layer indicator; otherwise the UE does not report the RAN visible application layer indicator measurement results corresponding to the application layer indicator.

Alternatively, when the plurality of measurement results of the specific application layer indicator meet the event corresponding to the application layer indicator, the UE does not report the RAN visible application layer indicator measurement results corresponding to the application layer indicator; otherwise the UE reports the RAN visible application layer indicator measurement results corresponding to the application layer indicator.

Specifically, the UE may determine, at the AS layer of the UE or the upper layer of the AS layer of the UE, whether to report the RAN visible application layer indicator measurement results. Optionally, when the AS of the UE determines whether to report the RAN visible application layer indicator measurement results, the foregoing plurality of measurement results are the plurality of RAN visible application layer indicator measurement results received by the AS of the UE from the upper layer of the AS of the UE. The foregoing plurality of measurement results may be measurement results included in one piece of measurement result information received by the AS of the UE from the upper layer, or may be measurement results included in a plurality of pieces of measurement result information received by the AS of the UE from the upper layer.

Optionally, the reporting, by the UE, the RAN visible application layer indicator measurement result may be reporting a specific RAN visible application layer indicator measurement result, namely, a specific value, or may be reporting that the RAN visible application layer indicator meets the corresponding event.

Next, to better implement the foregoing solutions in embodiments of this application, embodiments of this application further provide a related apparatus configured to implement the foregoing solutions. Specifically, FIG. 7 is a diagram of a structure of a communication apparatus according to an embodiment of this application. The apparatus may be a first RAN device, or may be a component (for example, a processor, a chip, or a chip system) of the first RAN device, or may be a logical node, a logical module, or software that can implement all or some functions of the first RAN device. As shown in FIG. 7, the communication apparatus includes:
a sending unit 701, configured to send a handover request for a user equipment UE to a second RAN device, where a first RAN device configures a quality of experience QoE measurement task for the UE; and
a receiving unit 702, configured to receive a handover acknowledgment message from the second RAN device in response to the handover request, where
the sending unit 701 is further configured to send an access handover instruction to the UE, where the access handover instruction is used by the UE to determine a target QoE measurement task in the QoE measurement task, and the target QoE measurement task is a QoE measurement task that the UE keeps executing after accessing the second RAN device.

In a possible design, the access handover instruction includes first indication information, the first indication information indicates at least one of a first QoE measurement task, a second QoE measurement task, or a third QoE measurement task, the first QoE measurement task is a target QoE measurement task for which the UE keeps reporting a measurement result after accessing the second RAN device, the second QoE measurement task is a target QoE measurement task for which the UE suspends reporting a measurement result after accessing the second RAN device, and the third QoE measurement task is a QoE measurement task whose execution is canceled by the UE after the UE accesses the second RAN device.

In a possible design, the handover acknowledgment message indicates at least one of the first QoE measurement task, the second QoE measurement task, or the third QoE measurement task.

In a possible design, the handover request indicates at least one of the first QoE measurement task, the second QoE measurement task, or the third QoE measurement task.

In a possible design, the access handover instruction includes second indication information, the second indication information indicates a third QoE measurement task, the third QoE measurement task is a QoE measurement task whose execution is canceled by the UE after the UE accesses the second RAN device, the second indication information is used by the UE to determine the target QoE measurement task based on the third QoE measurement task, and the target QoE measurement task is a QoE measurement task that is other than the third QoE measurement task in the QoE tasks and that is capable of being supported by the second RAN device.

In a possible design, if there is one target QoE measurement task, the target QoE measurement task is a first QoE measurement task, and the first QoE measurement task is a target QoE measurement task for which the UE keeps reporting a measurement result after accessing the second RAN device.

In a possible design, if there are a plurality of target QoE measurement tasks, the target QoE measurement task is a second QoE measurement task, and the second QoE measurement task is a target QoE measurement task for which the UE suspends reporting a measurement result after accessing the second RAN device.

In a possible design, the access handover instruction includes third indication information, and the third indication information indicates the UE to cancel reporting a RAN device visible measurement result.

In a possible design, the handover request includes fourth indication information, the fourth indication information indicates a first minimization of drive tests MDT task and a second MDT task that are associated with a same QoE measurement task, the first MDT task is an MDT task associated with the QoE measurement task when the UE accesses the first RAN device, and the second MDT task is an MDT task associated with the QoE measurement task when the UE accesses the second RAN device.

In a possible design, the handover request includes an address of a first QoE measurement collection device and an address of a second QoE measurement collection device, the first QoE measurement collection device is configured to collect a measurement result of a QoE measurement task from the first RAN device, and the second QoE measurement collection device is configured to collect a measurement result of a QoE measurement task from the second RAN device.

FIG. 8 is a diagram of another structure of a communication apparatus according to an embodiment of this application. The apparatus may be a UE, or may be a component (for example, a processor, a chip, or a chip system) of the UE, or may be a logical node, a logical module, or software that can implement all or some functions of the UE. As shown in FIG. 8, the communication apparatus includes:
a transceiver unit 801, configured to receive a handover instruction from a first radio access network RAN device, where the first RAN device has configured a quality of experience QoE measurement task for a UE; and
a processing unit 802, configured to determine a target QoE measurement task in the QoE measurement task based on the handover instruction, where
the processing unit 802 is further configured to access a second RAN device based on the handover instruction; and
the processing unit 802 is further configured to keep executing the target QoE measurement task.

In a possible design, the handover instruction includes first indication information, the first indication information indicates at least one of a first QoE measurement task, a second QoE measurement task, or a third QoE measurement task, the first QoE measurement task is a target QoE measurement task for which the UE keeps reporting a measurement result after accessing the second RAN device, the second QoE measurement task is a target QoE measurement task for which the UE suspends reporting a measurement result after accessing the second RAN device, and the third QoE measurement task is a QoE measurement task whose execution is canceled by the UE after the UE accesses the second RAN device.

In a possible design, the handover instruction includes second indication information, the second indication information indicates a third QoE measurement task, and the third QoE measurement task is a QoE measurement task whose execution is canceled by the UE after the UE accesses the second RAN device.

In a possible design, the processing unit 802 is specifically configured to:
determine a target QoE measurement task in a plurality of QoE measurement tasks based on the third QoE measurement task indicated by the second indication information, where the target QoE measurement task is a QoE measurement task that is other than the third QoE measurement task in the QoE measurement task and that is capable of being supported by the second RAN device.

In a possible design, the processing unit 802 is specifically configured to:
in response to receiving the handover instruction, determine, by the UE, that a QoE measurement task that is capable of being supported by the second RAN device in the QoE measurement task is the target QoE measurement task.

In a possible design, if there is one target QoE measurement task, the target QoE measurement task is a first QoE measurement task, and the first QoE measurement task is a target QoE measurement task for which the UE keeps reporting a measurement result after accessing the second RAN device.

In a possible design, if there are a plurality of target QoE measurement tasks, the target QoE measurement task is a second QoE measurement task, and the second QoE measurement task is a target QoE measurement task for which the UE suspends reporting a measurement result after accessing the second RAN device.

In a possible design, the processing unit 802 is further configured to:
access a third RAN device; and
send a QoE measurement record to the third device, where the QoE measurement record indicates at least one of the first QoE measurement task, the second QoE measurement task, or the third QoE measurement task, the first QoE measurement task is the target QoE measurement task for which the UE keeps reporting the measurement result after accessing the second RAN device, the second QoE measurement task is the target QoE measurement task for which the UE suspends reporting the measurement result after accessing the second RAN device, and the third QoE measurement task is the QoE measurement task whose execution is canceled by the UE after the UE accesses the second RAN device.

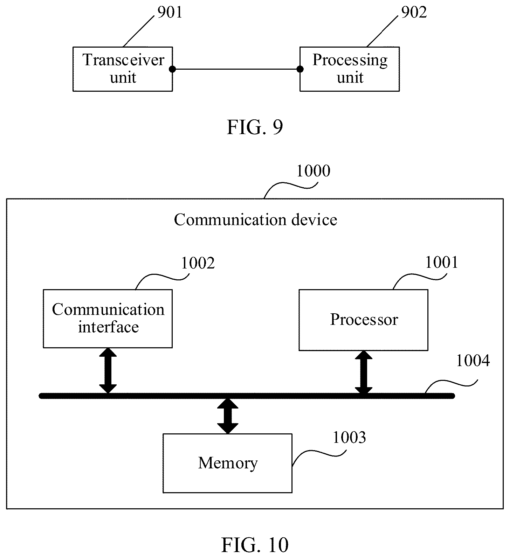

FIG. 9 is a diagram of another structure of a communication apparatus according to an embodiment of this application. The apparatus may be a second RAN device, or may be a component (for example, a processor, a chip, or a chip system) of the second RAN device, or may be a logical node, a logical module, or software that can implement all or some functions of the second RAN device. As shown in FIG. 9, the communication apparatus includes:
a transceiver unit 901, configured to receive a handover request for a user equipment UE from a first RAN device, where the first RAN device configures a quality of experience QoE measurement task for the UE; and
a transceiver unit 901, configured to send a handover acknowledgment message for the handover request to the first RAN device, where the handover acknowledgment message indicates a target QoE measurement task, and the target QoE measurement task is a QoE measurement task that the UE keeps executing after accessing the second RAN device.

In a possible design, the handover acknowledgment message further indicates a third QoE measurement task, and the third QoE measurement task is a QoE measurement task whose execution is canceled by the UE after the UE accesses the second RAN device.

In a possible design, the target QoE measurement task includes a first QoE measurement task and a second QoE measurement task, the first QoE measurement task is a target QoE measurement task for which the UE keeps reporting a measurement result after accessing the second RAN device, and the second QoE measurement task is a target QoE measurement task for which the UE suspends reporting a measurement result after accessing the second RAN device.

In a possible design, the handover request includes fourth indication information, the fourth indication information indicates a first minimization of drive tests MDT task and a second MDT task that are associated with a same QoE measurement task, the first MDT task is an MDT task associated with the QoE measurement task when the UE accesses the first RAN device, and the second MDT task is an MDT task associated with the QoE measurement task when the UE accesses the second RAN device.

In a possible design, the communication apparatus further includes a processing unit 902, where
the transceiver unit is further configured to receive a measurement result of the target QoE measurement task from the UE; and
the processing unit is configured to determine, based on third indication information and the measurement result of the target QoE measurement task, the second MDT task corresponding to the target QoE measurement task.

In a possible design, the transceiver unit 901 is further configured to obtain fifth indication information, where the fifth indication information indicates a second MDT task associated with the target QoE measurement task;
the transceiver unit 901 is further configured to receive a measurement result of the target QoE measurement task from the UE; and
the processing unit 902 is further configured to determine, based on the fifth indication information and the measurement result of the target QoE measurement task, the second MDT task corresponding to the target QoE measurement task.

FIG. 10 is a diagram of a structure of a communication device 1000 according to this application. The communication device 1000 may be specifically the first RAN device in the foregoing embodiments, a component (for example, a processor, a chip, or a chip system) of the first RAN device, or a logical node, a logical module, or software that can implement all or some functions of the first RAN device. Alternatively, the communication device 1000 may be specifically the UE in the foregoing embodiments, a component (for example, a processor, a chip, or a chip system) of the UE, or a logical node, a logical module, or software that can implement all or some functions of the UE. Alternatively, the communication device 1000 may be specifically the second RAN device in the foregoing embodiments, a component (for example, a processor, a chip, or a chip system) of the second RAN device, or a logical node, a logical module, or software that can implement all or some functions of the second RAN device. FIG. 10 is a diagram of a possible logical structure of the communication device 1000. The communication device 1000 may include but is not limited to at least one processor 1001 and a communication interface 1002.

Further, optionally, the apparatus may include at least one of a memory 1003 and a bus 1004. In this embodiment of this application, the at least one processor 1001 is configured to perform control processing on an action of the communication device 1000.

In addition, the processor 1001 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication device 1000 shown in FIG. 10 may be specifically configured to implement the steps implemented by the first RAN device in the foregoing method embodiments, and implement technical effect corresponding to the first RAN device; or the communication device 1000 may be specifically configured to implement the steps implemented by the UE in the foregoing method embodiments, and implement technical effect corresponding to the UE; or the communication device 1000 may be specifically configured to implement the steps implemented by the second RAN device in the foregoing method embodiments, and implement technical effect corresponding to the second RAN device. For a specific implementation of the communication device shown in FIG. 10, refer to the descriptions in the foregoing method embodiments. Details are not described herein again.

An embodiment of this application further provides a computer program product including instructions. The computer program product may be software or a program product that includes the instructions and that can be run on a computing device or stored in any usable medium. When the computer program product is run on at least one computer device, the at least one computer device is enabled to perform the method described in the embodiment shown in FIG. 3, FIG. 4, FIG. 5, or FIG. 6.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state disk), or the like. The computer-readable storage medium includes instructions, and the instructions indicate the computing device to perform the method described in the embodiment shown in FIG. 3, FIG. 4, FIG. 5, or FIG. 6.

The communication apparatus provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the method described in the embodiment shown in FIG. 3, FIG. 4, FIG. 5, or FIG. 6. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

In addition, it should be noted that the described apparatus embodiments are merely examples. The units described as separate parts may or may not be physically separate, and parts displayed as units may or may not be physical units, may be located in one position, or may be distributed on a plurality of network units. Some or all the modules may be selected based on actual requirements to achieve the objectives of the solutions in embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. A quality of experience measurement method, comprising:
sending, by a first radio access network RAN device, a handover request for a user equipment UE to a second RAN device, wherein the first RAN device configures a quality of experience QoE measurement task for the UE;
receiving, by the first RAN device, a handover acknowledgment message from the second RAN device in response to the handover request; and
sending, by the first RAN device, an access handover instruction to the UE, wherein the access handover instruction is used by the UE to determine a target QoE measurement task in the QoE measurement task, and the target QoE measurement task is the QoE measurement task that the UE keeps executing after accessing the second RAN device.

2. The method according to claim 1, wherein the access handover instruction comprises first indication information, the first indication information indicates at least one of a first QoE measurement task, a second QoE measurement task, or a third QoE measurement task, the first QoE measurement task is the target QoE measurement task for which the UE keeps reporting a measurement result after accessing the second RAN device, the second QoE measurement task is the target QoE measurement task for which the UE suspends reporting a measurement result after accessing the second RAN device, and the third QoE measurement task is the QoE measurement task whose execution is canceled by the UE after the UE accesses the second RAN device.

3. The method according to claim 2, wherein the handover acknowledgment message indicates at least one of the first QoE measurement task, the second QoE measurement task, or the third QoE measurement task.

4. The method according to claim 2, wherein the handover request indicates at least one of the first QoE measurement task, the second QoE measurement task, or the third QoE measurement task.

5. The method according to claim 1, wherein the access handover instruction comprises second indication information, the second indication information indicates a third QoE measurement task, the third QoE measurement task is the QoE measurement task whose execution is canceled by the UE after the UE accesses the second RAN device, the second indication information is used by the UE to determine the target QoE measurement task based on the third QoE measurement task, and the target QoE measurement task is a QoE measurement task that is other than the third QoE measurement task in the QoE tasks and that is capable of being supported by the second RAN device.

6. The method according to claim 5, wherein if there is one target QoE measurement task, the target QoE measurement task is a first QoE measurement task, and the first QoE measurement task is the target QoE measurement task for which the UE keeps reporting a measurement result after accessing the second RAN device.

7. The method according to claim 5, wherein if there are a plurality of target QoE measurement tasks, the target QoE measurement task is a second QoE measurement task, and the second QoE measurement task is the target QoE measurement task for which the UE suspends reporting a measurement result after accessing the second RAN device.

8. The method according to any one of claims 1 to 7, wherein the access handover instruction comprises third indication information, and the third indication information indicates the UE to cancel reporting a RAN device visible measurement result.

9. The method according to claims 1 to 8, wherein the handover request comprises fourth indication information, the fourth indication information indicates a first minimization of drive tests MDT task and a second MDT task that are associated with a same QoE measurement task, the first MDT task is an MDT task associated with the QoE measurement task when the UE accesses the first RAN device, and the second MDT task is an MDT task associated with the QoE measurement task when the UE accesses the second RAN device.

10. The method according to claims 1 to 9, wherein the handover request comprises an address of a first QoE measurement collection device and an address of a second QoE measurement collection device, the first QoE measurement collection device is configured to collect a measurement result of a QoE measurement task from the first RAN device, and the second QoE measurement collection device is configured to collect a measurement result of a QoE measurement task from the second RAN device.

11. A quality of experience measurement method, comprising:
receiving, by a user equipment UE, a handover instruction from a first radio access network RAN device, wherein the first RAN device has configured a quality of experience QoE measurement task for the UE;
determining, by the UE, a target QoE measurement task in the QoE measurement task based on the handover instruction;
accessing, by the UE, the second RAN device based on the handover instruction; and
keeping, by the UE, executing the target QoE measurement task.

12. The method according to claim 11, wherein the handover instruction comprises first indication information, the first indication information indicates at least one of a first QoE measurement task, a second QoE measurement task, or a third QoE measurement task, the first QoE measurement task is the target QoE measurement task for which the UE keeps reporting a measurement result after accessing the second RAN device, the second QoE measurement task is the target QoE measurement task for which the UE suspends reporting a measurement result after accessing the second RAN device, and the third QoE measurement task is the QoE measurement task whose execution is canceled by the UE after the UE accesses the second RAN device.

13. The method according to claim 11, wherein the handover instruction comprises second indication information, the second indication information indicates a third QoE measurement task, and the third QoE measurement task is the QoE measurement task whose execution is canceled by the UE after the UE accesses the second RAN device.

14. The method according to claim 13, wherein determining, by the UE, the target QoE measurement task in the QoE measurement task based on the handover instruction comprises:
determining, by the UE, a target QoE measurement task in the plurality of QoE measurement tasks based on the third QoE measurement task indicated by the second indication information, wherein the target QoE measurement task is a QoE measurement task that is other than the third QoE measurement task in the QoE measurement task and that is capable of being supported by the second RAN device.

15. The method according to claim 11, wherein determining, by the UE, the target QoE measurement task in the QoE measurement task based on the handover instruction comprises:
in response to receiving the handover instruction, determining, by the UE, that a QoE measurement task that is capable of being supported by the second RAN device in the QoE measurement task is the target QoE measurement task.

16. The method according to claim 14 or 15, wherein if there is one target QoE measurement task, the target QoE measurement task is a first QoE measurement task, and the first QoE measurement task is the target QoE measurement task for which the UE keeps reporting a measurement result after accessing the second RAN device.

17. The method according to claim 14 or 15, wherein if there are a plurality of target QoE measurement tasks, the target QoE measurement task is a second QoE measurement task, and the second QoE measurement task is the target QoE measurement task for which the UE suspends reporting a measurement result after accessing the second RAN device.

18. The method according to any one of claims 11 to 17, wherein after accessing, by the UE, the second RAN device based on the handover instruction; the method further comprises:
accessing, by the UE, a third RAN device; and
sending, by the UE, a QoE measurement record to the third device, wherein the QoE measurement record indicates at least one of the first QoE measurement task, the second QoE measurement task, or the third QoE measurement task, the first QoE measurement task is the target QoE measurement task for which the UE keeps reporting the measurement result after accessing the second RAN device, the second QoE measurement task is the target QoE measurement task for which the UE suspends reporting the measurement result after accessing the second RAN device, and the third QoE measurement task is the QoE measurement task whose execution is canceled by the UE after the UE accesses the second RAN device.

19. A quality of experience measurement method, comprising:
receiving, by a second radio access network RAN device, a handover request for a user equipment UE from a first RAN device, wherein the first RAN device configures a quality of experience QoE measurement task for the UE; and
sending, by the second RAN device, a handover acknowledgment message for the handover request to the first RAN device, wherein the handover acknowledgment message indicates a target QoE measurement task, and the target QoE measurement task is the QoE measurement task that the UE keeps executing after accessing the second RAN device.

20. The method according to claim 19, wherein the handover acknowledgment message further indicates a third QoE measurement task, and the third QoE measurement task is the QoE measurement task whose execution is canceled by the UE after the UE accesses the second RAN device.

21. The method according to claim 19 or 20, wherein the target QoE measurement task comprises a first QoE measurement task and a second QoE measurement task, the first QoE measurement task is the target QoE measurement task for which the UE keeps reporting a measurement result after accessing the second RAN device, and the second QoE measurement task is the target QoE measurement task for which the UE suspends reporting a measurement result after accessing the second RAN device.

22. The method according to any one of claims 19 to 21, wherein the handover request comprises fourth indication information, the fourth indication information indicates a first minimization of drive tests MDT task and a second MDT task that are associated with a same QoE measurement task, the first MDT task is an MDT task associated with the QoE measurement task when the UE accesses the first RAN device, and the second MDT task is an MDT task associated with the QoE measurement task when the UE accesses the second RAN device.

23. The method according to claim 22, wherein the method further comprises:
receiving, by the second RAN device, a measurement result of the target QoE measurement task from the UE; and
determining, by the second RAN device based on the third indication information and the measurement result of the target QoE measurement task, the second MDT task corresponding to the target QoE measurement task.

24. The method according to any one of claims 19 to 21, wherein the method further comprises:
obtaining, by the second RAN device, fifth indication information, wherein the fifth indication information indicates a second MDT task associated with the target QoE measurement task;
receiving, by the second RAN device, a measurement result of the target QoE measurement task from the UE; and
determining, by the second RAN device based on the fifth indication information and the measurement result of the target QoE measurement task, the second MDT task corresponding to the target QoE measurement task.

25. A communication apparatus, comprising a module configured to perform the method according to any one of claims 1 to 10, comprising a module configured to perform the method according to any one of claims 11 to 18, or comprising a module configured to perform the method according to any one of claims 19 to 24.

26. A communication device, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 10 through a logical circuit or by executing code instructions, or the processor is configured to implement the method according to any one of claims 11 to 18 through a logical circuit or by executing code instructions, or the processor is configured to implement the method according to any one of claims 19 to 24 through a logical circuit or by executing code instructions.

27. A computer-readable storage medium, wherein the storage medium stores a computer program or instructions; and when the computer program or the instructions are executed by a communication apparatus, the method according to any one of claims 1 to 10 is implemented, or the method according to any one of claims 11 to 18 is implemented, or the method according to any one of claims 19 to 24 is implemented.
